# EUROPEAN PATENT APPLICATION

(11) **EP 4 254 115 A1**
(43) Date of publication of application: **04.10.2023**
(21) Application number: 23165820.4
(22) Date of filing: 31.03.2023
(51) Int. Cl.: G05B 23/02

(54) **CHILLER RATING ENGINE DIGITAL TWIN AND ENERGY BALANCE MODEL**

(30) Priority: 31.03.2022 IN 202221019603
(71) Applicant: Johnson Controls Tyco IP Holdings LLP, Milwaukee, WI 53209 (US)
(72) Inventor: KAUFFMAN, Justin P., York, Pennsylvania, 17403 (US); SARFRAZ, Omer, York, Pennsylvania, 17402 (US); CHAKRAPANI, Uday, 400089 Chembur, Mumbai (IN); RAMANASANKARAN, Rajiv, San Jose, California, 95136 (US)
(74) Representative: Meissner Bolte Partnerschaft mbB

(57) **Abstract**

A method for controlling building equipment. The method includes obtaining a device model for a physical device of building equipment installed at a building site, the device model indicating an expected performance of the physical device under design operating conditions. The method further includes obtaining operating conditions under which the physical device is operating at the building site, and generating a virtual device representing the physical device by adapting the device model to the operating conditions. The method also includes using a rating engine to generate a device rating for the virtual device, the device rating indicating an expected performance of the physical device under the operating conditions. The method also includes obtaining actual operating data indicating an actual performance of the physical device under the operating conditions, and initiating an automated action based on a comparison of the actual operating data with the device rating for the virtual device.

## Description

### CROSS-REFERENCE TO RELATED PATENT APPLICATIONS

This application claims the benefit of and priority to Indian Patent Application No. 202221019603, filed on March 31, 2022, the entire disclosure of which is hereby incorporated by reference herein

### BACKGROUND

The present disclosure relates generally to a web services system, and more particularly to a web services system configured to evaluate and control performance of a device at a building site.

A chiller is an apparatus that is used to generate temperature controlled water, most often cooled water, which can be used to cool air, products, machines, etc. Chillers have become increasingly complex over time due to, for example, advances in different types of chillers (e.g., air chillers, water chillers, centrifugal chillers, etc.), technological improvements to component parts (e.g., compressors, drive lines, motors, etc.), changes in chiller sizes, etc. Thus, it has become increasingly difficult to evaluate the characteristics and/or control components of a chiller as the chiller operates at a building site. For example, the performance of a chiller (and/or components) may be modeled under peak design operating conditions; however, the performance of the chiller at the building site may be different under actual operating conditions. It would be beneficial to have a system and/or method for quickly evaluating and/or controlling chiller components based on the characteristics (e.g., performance) of the chiller under actual operating conditions.

### SUMMARY

One implementation of the present disclosure is a method for evaluating and controlling building equipment. The method includes obtaining a device model for a physical device of building equipment installed at a building site, the device model indicating an expected performance of the physical device under design operating conditions. The method also includes obtaining operating conditions under which the physical device is operating at the building site, and generating a virtual device representing the physical device by adapting the device model to the operating conditions. The method further includes using a rating engine to generate a device rating for the virtual device, the device rating indicating an expected performance of the physical device under the operating conditions. The method also includes obtaining actual operating data indicating an actual performance of the physical device under the operating conditions, and initiating an automated action based on a comparison of the actual operating data with the device rating for the virtual device.

In some embodiments, the method further includes determining a state of the physical device.

In some embodiments, in response to determining the state of the physical device is a transient state, the method further includes initiating another automated action to bring the physical device to a steady state.

In some embodiments, the method further includes determining additional rating information based on the device model and the operating conditions.

In some embodiments, determining additional rating information includes determining at least one of an operating capacity of the physical device, a load applied at the physical device, and a flow rate of a fluid of the physical device.

In some embodiments, the method further includes comparing the actual operating data with the device rating for the virtual device, and determining whether the actual operating data is within a predetermined threshold compared to the device rating for the virtual device.

In some embodiments, in response to determining the actual operating data is within the predetermined threshold compared to the device rating for the virtual device, initiating the automated action includes providing an indication that the physical device is operating in accordance with the expected performance.

In some embodiments, in response to determining the actual operating data is outside the predetermined threshold compared to the device rating for the virtual device, initiating the automated action includes controlling a component of the physical device to bring the actual performance of the physical device in accordance with the expected performance.

In some embodiments, obtaining the device model for the physical device of building equipment installed at the building site includes obtaining a heat pump model for a physical heat pump installed at the building site.

Another implementation of the present disclosure is a system for evaluating and controlling building equipment. The system includes one or more memory devices having instructions stored thereon that, when executed by one or more processors, cause the one or more processors to perform operations. The operations include obtaining a device model for a physical device of building equipment installed at a building site, the device model indicating an expected performance of the physical device under design operating conditions. The operations further include obtaining operating conditions under which the physical device is operating at the building site, and generating a virtual device representing the physical device by adapting the device model to the operating conditions. The operations also include using a rating engine to generate a device rating for the virtual device, the device rating indicating an expected performance of the physical device under the operating conditions. The operations further include obtaining actual operating data indicating an actual performance of the physical device under the operating conditions, and initiating an automated action based on a comparison of the actual operating data with the device rating for the virtual device.

In some embodiments, the operations further include determining a state of the physical device.

In some embodiments, in response to determine the state of the physical device is a transient state, the method further includes initiating another automated action to bring the physical device to a steady state.

In some embodiments, the operations further include determining additional rating information based on the device model and the operating conditions.

In some embodiments, the additional rating information includes at least one of an operating capacity of the physical device, a load applied at the physical device, and a flow rate of a fluid of the physical device.

In some embodiments, the operations further include comparing the actual operating data with the device rating for the virtual device, and determining whether the actual operating data is within a predetermined threshold compared to the device rating for the virtual device.

In some embodiments, in response to determining the actual operating data is within the predetermined threshold compared to the device rating for the virtual device, initiating the automated action includes providing an indication that the physical device is operating in accordance with the expected performance.

In some embodiments, in response to determining the actual operating data is outside the predetermined threshold compared to the device rating for the virtual device, initiating the automated action includes controlling a component of the physical device to bring the actual performance of the physical device in accordance with the expected performance.

Yet another implementation of the present disclosure is a non-transitory computer readable medium comprising instructions stored thereon that, when executed by one or more processors, cause the one or more processors to obtain a device model for a physical device of building equipment installed at a building site, the device model indicating an expected performance of the physical device under design operating conditions. The instructions further cause the one or more processors to obtain operating conditions under which the physical device is operating at the building site, and generate a virtual device representing the physical device by adapting the device model to the operating conditions. The instructions further cause the one or more processors to use a rating engine to generate a device rating for the virtual device, the device rating indicating an expected performance of the physical device under the operating conditions. Further the instructions cause the one or more processors to obtain actual operating data indicating an actual performance of the physical device under the operating conditions, and initiate an automated action based on a comparison of the actual operating data with the device rating for the virtual device.

In some embodiments, the instructions further causing the one or more processors to determine a state of the physical device.

In some embodiments, in response to determining the state of the physical device is a transient state, the instructions further cause the one or more processors to initiate another automated action to bring the physical device to a steady state.

In some embodiments, the instructions further causing the one or more processors to determine additional rating information based on the device model and the operating conditions.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a schematic drawing of a building equipped with a building management system (BMS) and a HVAC system, according to some embodiments.
FIG. 2 is a schematic drawing of a waterside system which can be used as part of the HVAC system of FIG. 1, according to some embodiments.
FIG. 3 is a block diagram of an airside system which can be used as part of the HVAC system of FIG. 1, according to some embodiments.
FIG. 4 is a block diagram of a BMS which can be used in the building of FIG. 1, according to some embodiments.
FIG. 5 is another block diagram of a BMS which can be used in the building of FIG. 1, according to some embodiments.
FIG. 6 is a block diagram of a web services system, according to some embodiments.
FIG. 7 is a block diagram a virtual device platform, according to some embodiments.
FIG. 8 is a flow diagram of a process for determining a characteristic and controlling a device of building equipment, according to some embodiments.
FIG. 9 is a flow diagram of a process for evaluating and controlling a device of building equipment, according to some embodiments.

### DETAILED DESCRIPTION

### Overview

Referring generally to the FIGURES, systems and methods for evaluating and controlling building equipment are shown, according to various embodiments. A virtual device platform is a component of a web services system that obtains a device model for a physical device of building equipment installed at a building site. The device model may indicate an expected characteristic (e.g., performance) of the physical device under design operating conditions. The virtual device platform may also obtain operating conditions under which the physical device is operating at the building site (e.g., actual operating conditions). Further, the virtual device platform may generate a virtual device that represents the physical device by adapting the device model to the operating conditions. Using a rating engine, the virtual device platform may generate a device rating for the virtual device, which indicates an expected characteristic (e.g., performance) of the physical device under the operating conditions. The virtual device platform may also obtain actual operating data, which indicates the actual characteristic (e.g., performance) of the physical device under the operating conditions. Further, the virtual device platform may initiate an automated action based on a comparison of the actual operating data with the device rating for the virtual device. The automated action may include providing an indication that the physical device is operating as expected, controlling the physical device to adjust the device performance, and/or any other suitable action.

In some embodiments, the virtual device platform is configured to determine a state of the physical device. For example, the virtual device platform may determine whether the physical device is in a steady state (or a transient state). If the virtual device platform determines the physical device is in a transient state, the virtual device platform may initiate another automated action (e.g., provide instructions, control the physical device, etc.), for example to bring the physical device to a steady state. In other embodiments, the virtual device platform is configured to determine additional rating information relating to the physical device (e.g., based on the device model, the operating conditions, etc.). The additional rating information may include an operating capacity of the physical device, a load applied at the physical device, a flow rate of a fluid of the physical device, and/or any other information that may be needed to run a device rating. In yet other embodiments, the virtual device platform is also configured to compare the actual operating data with the device rating data for the virtual device, and/or determine whether the actual operating data is within a predetermined threshold compared to the device rating data of the virtual device. If the virtual device platform determines the actual operating data is within the predetermined threshold, the virtual device platform may initiate an automated action (e.g., provide an indication that the physical device is operating in accordance with the expected performance). Conversely, if the virtual device platform determines the actual operating data is outside the predetermined threshold, the virtual device platform may initiate a different automated action (e.g., control a component of the physical device to bring the actual performance of the physical device in accordance with the expected performance).

As described herein, it is contemplated that the systems and methods described may be readily applied to various building equipment devices without departing from the teachings of the present disclosure. Building equipment devices may be a device of an HVAC system (e.g., heaters, chillers, heat pumps, air handling units, pumps, fans, thermal energy storage, etc., and/or any other device configured to provide heating, cooling, ventilation, or other services for a building), energy generation and/or storage devices (e.g., thermal storage tanks, battery banks, gas turbines, steam turbines, etc.), a device of a security system (e.g., occupancy sensors, video surveillance cameras, digital video recorders, video processing servers, intrusion detection devices, access control devices and servers, and/or other security-related devices), a device of a lighting system (e.g., light fixtures, ballasts, lighting sensors, dimmers, or other devices configured to controllably adjust the amount of light to a building, etc.), a device of a fire alerting system (e.g., fire detection devices, fire notification devices, fire suppression devices, etc.), and/or a device of any other system that is capable of managing building functions or devices, or any combination thereof.

### Building HVAC Systems and Building Management Systems

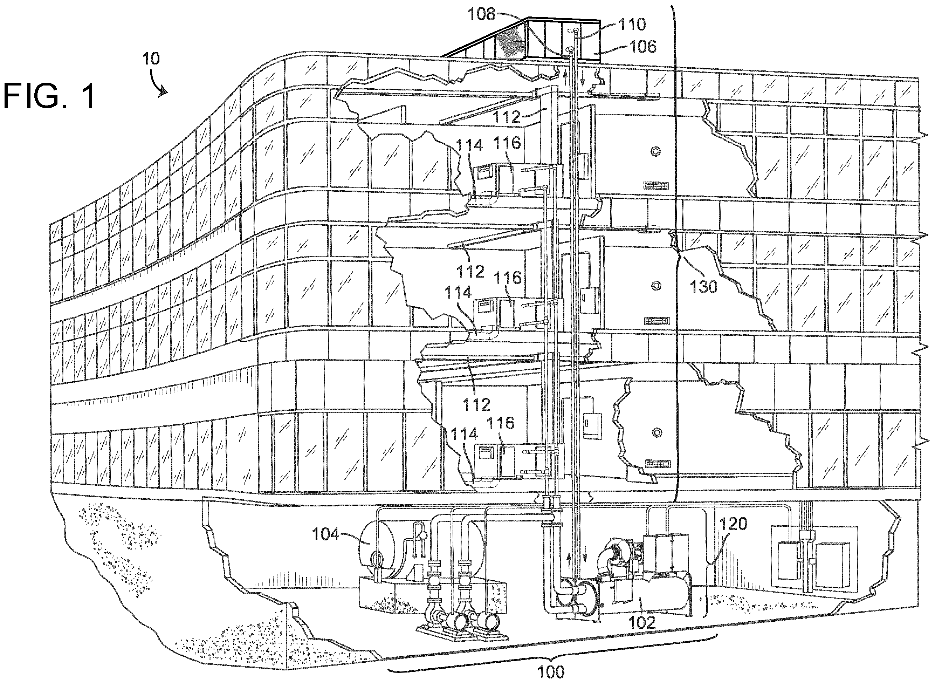

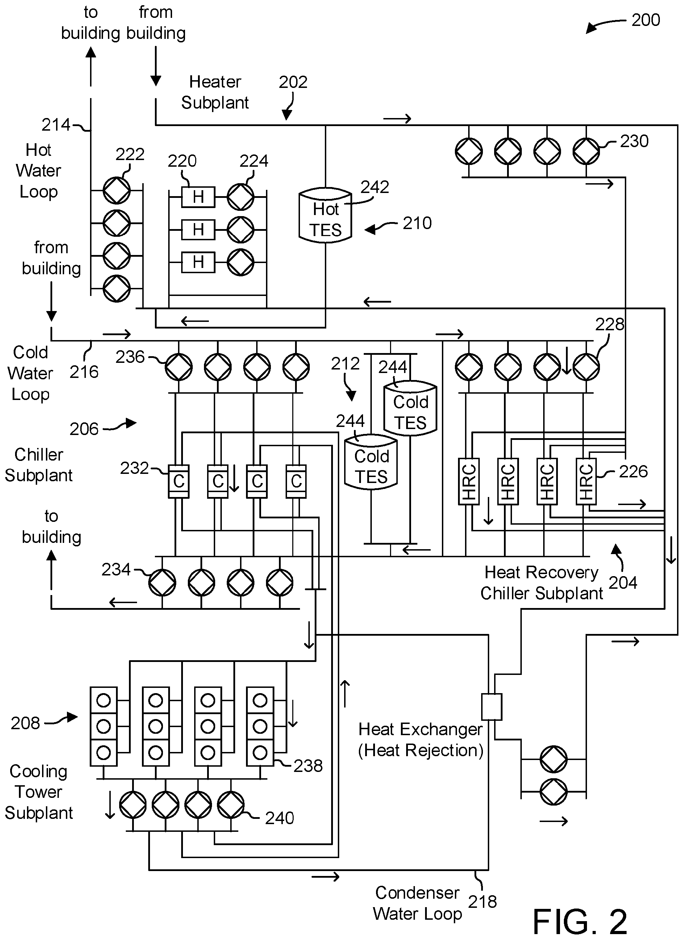

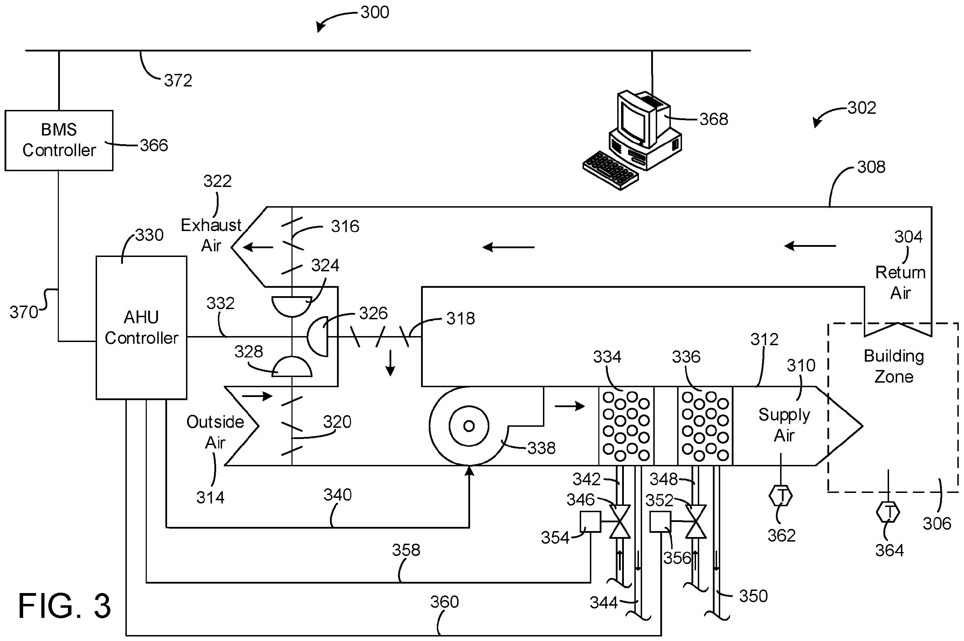

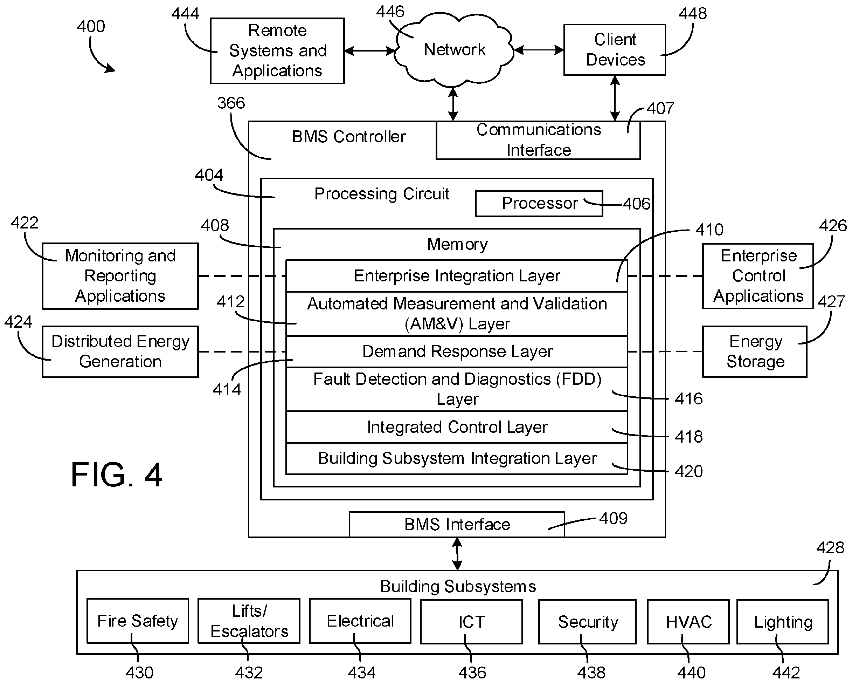

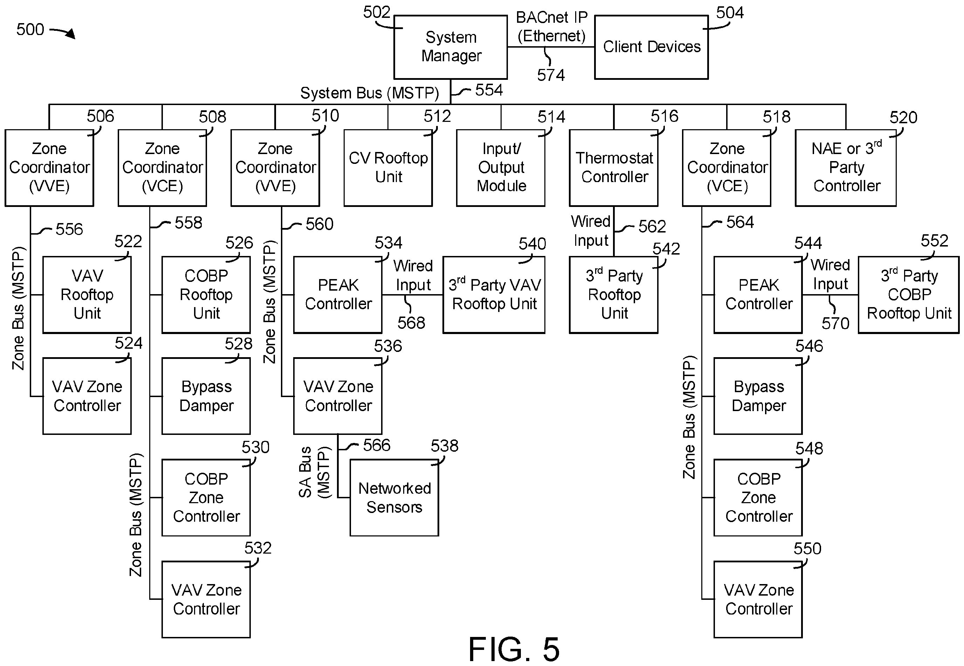

Referring now to FIGS. 1-5, several building management systems (BMS) and HVAC systems in which the systems and methods of the present disclosure can be implemented are shown, according to some embodiments. In brief overview, FIG. 1 shows a building 10 equipped with a HVAC system 100. FIG. 2 is a block diagram of a waterside system 200 which can be used to serve building 10. FIG. 3 is a block diagram of an airside system 300 which can be used to serve building 10. FIG. 4 is a block diagram of a BMS which can be used to monitor and control building 10. FIG. 5 is a block diagram of another BMS which can be used to monitor and control building 10.

### Building and HVAC System

Referring particularly to FIG. 1, a perspective view of a building 10 is shown. Building 10 is served by a BMS. A BMS is, in general, a system of devices configured to control, monitor, and manage equipment in or around a building or building area. A BMS can include, for example, a HVAC system, a security system, a lighting system, a fire alerting system, any other system that is capable of managing building functions or devices, or any combination thereof.

The BMS that serves building 10 includes a HVAC system 100. HVAC system 100 can include a plurality of HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 may provide a heated or chilled fluid to an air handling unit of airside system 130. Airside system 130 may use the heated or chilled fluid to heat or cool an airflow provided to building 10. An exemplary waterside system and airside system which can be used in HVAC system 100 are described in greater detail with reference to FIGS. 2-3.

HVAC system 100 is shown to include a chiller 102, a boiler 104, and a rooftop air handling unit (AHU) 106. Waterside system 120 may use boiler 104 and chiller 102 to heat or cool a working fluid (e.g., water, glycol, etc.) and may circulate the working fluid to AHU 106. In various embodiments, the HVAC devices of waterside system 120 can be located in or around building 10 (as shown in FIG. 1) or at an offsite location such as a central plant (e.g., a chiller plant, a steam plant, a heat plant, etc.). The working fluid can be heated in boiler 104 or cooled in chiller 102, depending on whether heating or cooling is required in building 10. Boiler 104 may add heat to the circulated fluid, for example, by burning a combustible material (e.g., natural gas) or using an electric heating element. Chiller 102 may place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 can be transported to AHU 106 via piping 108.

AHU 106 may place the working fluid in a heat exchange relationship with an airflow passing through AHU 106 (e.g., via one or more stages of cooling coils and/or heating coils). The airflow can be, for example, outside air, return air from within building 10, or a combination of both. AHU 106 may transfer heat between the airflow and the working fluid to provide heating or cooling for the airflow. For example, AHU 106 can include one or more fans or blowers configured to pass the airflow over or through a heat exchanger containing the working fluid. The working fluid may then return to chiller 102 or boiler 104 via piping 110.

Airside system 130 may deliver the airflow supplied by AHU 106 (i.e., the supply airflow) to building 10 via air supply ducts 112 and may provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 can include dampers or other flow control elements that can be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 can include various sensors (e.g., temperature sensors, pressure sensors, etc.) configured to measure attributes of the supply airflow. AHU 106 may receive input from sensors located within AHU 106 and/or within the building zone and may adjust the flow rate, temperature, or other attributes of the supply airflow through AHU 106 to achieve setpoint conditions for the building zone.

### Waterside System

Referring now to FIG. 2, a block diagram of a waterside system 200 is shown, according to some embodiments. In various embodiments, waterside system 200 may supplement or replace waterside system 120 in HVAC system 100 or can be implemented separate from HVAC system 100. When implemented in HVAC system 100, waterside system 200 can include a subset of the HVAC devices in HVAC system 100 (e.g., boiler 104, chiller 102, pumps, valves, etc.) and may operate to supply a heated or chilled fluid to AHU 106. The HVAC devices of waterside system 200 can be located within building 10 (e.g., as components of waterside system 120) or at an offsite location such as a central plant.

In FIG. 2, waterside system 200 is shown as a central plant having a plurality of subplants 202-212. Subplants 202-212 are shown to include a heater subplant 202, a heat recovery chiller subplant 204, a chiller subplant 206, a cooling tower subplant 208, a hot thermal energy storage (TES) subplant 210, and a cold thermal energy storage (TES) subplant 212. Subplants 202-212 consume resources (e.g., water, natural gas, electricity, etc.) from utilities to serve thermal energy loads (e.g., hot water, cold water, heating, cooling, etc.) of a building or campus. For example, heater subplant 202 can be configured to heat water in a hot water loop 214 that circulates the hot water between heater subplant 202 and building 10. Chiller subplant 206 can be configured to chill water in a cold water loop 216 that circulates the cold water between chiller subplant 206 building 10. Heat recovery chiller subplant 204 can be configured to transfer heat from cold water loop 216 to hot water loop 214 to provide additional heating for the hot water and additional cooling for the cold water. Condenser water loop 218 may absorb heat from the cold water in chiller subplant 206 and reject the absorbed heat in cooling tower subplant 208 or transfer the absorbed heat to hot water loop 214. Hot TES subplant 210 and cold TES subplant 212 may store hot and cold thermal energy, respectively, for subsequent use.

Hot water loop 214 and cold water loop 216 may deliver the heated and/or chilled water to air handlers located on the rooftop of building 10 (e.g., AHU 106) or to individual floors or zones of building 10 (e.g., VAV units 116). The air handlers push air past heat exchangers (e.g., heating coils or cooling coils) through which the water flows to provide heating or cooling for the air. The heated or cooled air can be delivered to individual zones of building 10 to serve thermal energy loads of building 10. The water then returns to subplants 202-212 to receive further heating or cooling.

Although subplants 202-212 are shown and described as heating and cooling water for circulation to a building, it is understood that any other type of working fluid (e.g., glycol, CO2, etc.) can be used in place of or in addition to water to serve thermal energy loads. In other embodiments, subplants 202-212 may provide heating and/or cooling directly to the building or campus without requiring an intermediate heat transfer fluid. These and other variations to waterside system 200 are within the teachings of the present disclosure.

Each of subplants 202-212 can include a variety of equipment configured to facilitate the functions of the subplant. For example, heater subplant 202 is shown to include a plurality of heating elements 220 (e.g., boilers, electric heaters, etc.) configured to add heat to the hot water in hot water loop 214. Heater subplant 202 is also shown to include several pumps 222 and 224 configured to circulate the hot water in hot water loop 214 and to control the flow rate of the hot water through individual heating elements 220. Chiller subplant 206 is shown to include a plurality of chillers 232 configured to remove heat from the cold water in cold water loop 216. Chiller subplant 206 is also shown to include several pumps 234 and 236 configured to circulate the cold water in cold water loop 216 and to control the flow rate of the cold water through individual chillers 232.

Heat recovery chiller subplant 204 is shown to include a plurality of heat recovery heat exchangers 226 (e.g., refrigeration circuits) configured to transfer heat from cold water loop 216 to hot water loop 214. Heat recovery chiller subplant 204 is also shown to include several pumps 228 and 230 configured to circulate the hot water and/or cold water through heat recovery heat exchangers 226 and to control the flow rate of the water through individual heat recovery heat exchangers 226. Cooling tower subplant 208 is shown to include a plurality of cooling towers 238 configured to remove heat from the condenser water in condenser water loop 218. Cooling tower subplant 208 is also shown to include several pumps 240 configured to circulate the condenser water in condenser water loop 218 and to control the flow rate of the condenser water through individual cooling towers 238.

Hot TES subplant 210 is shown to include a hot TES tank 242 configured to store the hot water for later use. Hot TES subplant 210 may also include one or more pumps or valves configured to control the flow rate of the hot water into or out of hot TES tank 242. Cold TES subplant 212 is shown to include cold TES tanks 244 configured to store the cold water for later use. Cold TES subplant 212 may also include one or more pumps or valves configured to control the flow rate of the cold water into or out of cold TES tanks 244.

In some embodiments, one or more of the pumps in waterside system 200 (e.g., pumps 222, 224, 228, 230, 234, 236, and/or 240) or pipelines in waterside system 200 include an isolation valve associated therewith. Isolation valves can be integrated with the pumps or positioned upstream or downstream of the pumps to control the fluid flows in waterside system 200. In various embodiments, waterside system 200 can include more, fewer, or different types of devices and/or subplants based on the particular configuration of waterside system 200 and the types of loads served by waterside system 200.

### Airside System

Referring now to FIG. 3, a block diagram of an airside system 300 is shown, according to some embodiments. In various embodiments, airside system 300 may supplement or replace airside system 130 in HVAC system 100 or can be implemented separate from HVAC system 100. When implemented in HVAC system 100, airside system 300 can include a subset of the HVAC devices in HVAC system 100 (e.g., AHU 106, VAV units 116, ducts 112-114, fans, dampers, etc.) and can be located in or around building 10. Airside system 300 may operate to heat or cool an airflow provided to building 10 using a heated or chilled fluid provided by waterside system 200.

In FIG. 3, airside system 300 is shown to include an economizer-type air handling unit (AHU) 302. Economizer-type AHUs vary the amount of outside air and return air used by the air handling unit for heating or cooling. For example, AHU 302 may receive return air 304 from building zone 306 via return air duct 308 and may deliver supply air 310 to building zone 306 via supply air duct 312. In some embodiments, AHU 302 is a rooftop unit located on the roof of building 10 (e.g., AHU 106 as shown in FIG. 1) or otherwise positioned to receive both return air 304 and outside air 314. AHU 302 can be configured to operate exhaust air damper 316, mixing damper 318, and outside air damper 320 to control an amount of outside air 314 and return air 304 that combine to form supply air 310. Any return air 304 that does not pass through mixing damper 318 can be exhausted from AHU 302 through exhaust damper 316 as exhaust air 322.

Each of dampers 316-320 can be operated by an actuator. For example, exhaust air damper 316 can be operated by actuator 324, mixing damper 318 can be operated by actuator 326, and outside air damper 320 can be operated by actuator 328. Actuators 324-328 may communicate with an AHU controller 330 via a communications link 332. Actuators 324-328 may receive control signals from AHU controller 330 and may provide feedback signals to AHU controller 330. Feedback signals can include, for example, an indication of a current actuator or damper position, an amount of torque or force exerted by the actuator, diagnostic information (e.g., results of diagnostic tests performed by actuators 324-328), status information, commissioning information, configuration settings, calibration data, and/or other types of information or data that can be collected, stored, or used by actuators 324-328. AHU controller 330 can be an economizer controller configured to use one or more control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control actuators 324-328.

Still referring to FIG. 3, AHU 302 is shown to include a cooling coil 334, a heating coil 336, and a fan 338 positioned within supply air duct 312. Fan 338 can be configured to force supply air 310 through cooling coil 334 and/or heating coil 336 and provide supply air 310 to building zone 306. AHU controller 330 may communicate with fan 338 via communications link 340 to control a flow rate of supply air 310. In some embodiments, AHU controller 330 controls an amount of heating or cooling applied to supply air 310 by modulating a speed of fan 338.

Cooling coil 334 may receive a chilled fluid from waterside system 200 (e.g., from cold water loop 216) via piping 342 and may return the chilled fluid to waterside system 200 via piping 344. Valve 346 can be positioned along piping 342 or piping 344 to control a flow rate of the chilled fluid through cooling coil 334. In some embodiments, cooling coil 334 includes multiple stages of cooling coils that can be independently activated and deactivated (e.g., by AHU controller 330, by BMS controller 366, etc.) to modulate an amount of cooling applied to supply air 310.

Heating coil 336 may receive a heated fluid from waterside system 200 (e.g., from hot water loop 214) via piping 348 and may return the heated fluid to waterside system 200 via piping 350. Valve 352 can be positioned along piping 348 or piping 350 to control a flow rate of the heated fluid through heating coil 336. In some embodiments, heating coil 336 includes multiple stages of heating coils that can be independently activated and deactivated (e.g., by AHU controller 330, by BMS controller 366, etc.) to modulate an amount of heating applied to supply air 310.

Each of valves 346 and 352 can be controlled by an actuator. For example, valve 346 can be controlled by actuator 354 and valve 352 can be controlled by actuator 356. Actuators 354-356 may communicate with AHU controller 330 via communications links 358-360. Actuators 354-356 may receive control signals from AHU controller 330 and may provide feedback signals to controller 330. In some embodiments, AHU controller 330 receives a measurement of the supply air temperature from a temperature sensor 362 positioned in supply air duct 312 (e.g., downstream of cooling coil 334 and/or heating coil 336). AHU controller 330 may also receive a measurement of the temperature of building zone 306 from a temperature sensor 364 located in building zone 306.

In some embodiments, AHU controller 330 operates valves 346 and 352 via actuators 354-356 to modulate an amount of heating or cooling provided to supply air 310 (e.g., to achieve a setpoint temperature for supply air 310 or to maintain the temperature of supply air 310 within a setpoint temperature range). The positions of valves 346 and 352 affect the amount of heating or cooling provided to supply air 310 by cooling coil 334 or heating coil 336 and may correlate with the amount of energy consumed to achieve a desired supply air temperature. AHU 330 may control the temperature of supply air 310 and/or building zone 306 by activating or deactivating coils 334-336, adjusting a speed of fan 338, or a combination of both.

Still referring to FIG. 3, airside system 300 is shown to include a building management system (BMS) controller 366 and a client device 368. BMS controller 366 can include one or more computer systems (e.g., servers, supervisory controllers, subsystem controllers, etc.) that serve as system level controllers, application or data servers, head nodes, or master controllers for airside system 300, waterside system 200, HVAC system 100, and/or other controllable systems that serve building 10. BMS controller 366 may communicate with multiple downstream building systems or subsystems (e.g., HVAC system 100, a security system, a lighting system, waterside system 200, etc.) via a communications link 370 according to like or disparate protocols (e.g., LON, BACnet, etc.). In various embodiments, AHU controller 330 and BMS controller 366 can be separate (as shown in FIG. 3) or integrated. In an integrated implementation, AHU controller 330 can be a software module configured for execution by a processor of BMS controller 366.

In some embodiments, AHU controller 330 receives information from BMS controller 366 (e.g., commands, setpoints, operating boundaries, etc.) and provides information to BMS controller 366 (e.g., temperature measurements, valve or actuator positions, operating statuses, diagnostics, etc.). For example, AHU controller 330 may provide BMS controller 366 with temperature measurements from temperature sensors 362-364, equipment on/off states, equipment operating capacities, and/or any other information that can be used by BMS controller 366 to monitor or control a variable state or condition within building zone 306.

Client device 368 can include one or more human-machine interfaces or client interfaces (e.g., graphical user interfaces, reporting interfaces, text-based computer interfaces, client-facing web services, web servers that provide pages to web clients, etc.) for controlling, viewing, or otherwise interacting with HVAC system 100, its subsystems, and/or devices. Client device 368 can be a computer workstation, a client terminal, a remote or local interface, or any other type of user interface device. Client device 368 can be a stationary terminal or a mobile device. For example, client device 368 can be a desktop computer, a computer server with a user interface, a laptop computer, a tablet, a smartphone, a PDA, or any other type of mobile or non-mobile device. Client device 368 may communicate with BMS controller 366 and/or AHU controller 330 via communications link 372.

### Building Management Systems

Referring now to FIG. 4, a block diagram of a building management system (BMS) 400 is shown, according to some embodiments. BMS 400 can be implemented in building 10 to automatically monitor and control various building functions. BMS 400 is shown to include BMS controller 366 and a plurality of building subsystems 428. Building subsystems 428 are shown to include a building electrical subsystem 434, an information communication technology (ICT) subsystem 436, a security subsystem 438, a HVAC subsystem 440, a lighting subsystem 442, a lift/escalators subsystem 432, and a fire safety subsystem 430. In various embodiments, building subsystems 428 can include fewer, additional, or alternative subsystems. For example, building subsystems 428 may also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 428 include waterside system 200 and/or airside system 300, as described with reference to FIGS. 2-3.

Each of building subsystems 428 can include any number of devices, controllers, and connections for completing its individual functions and control activities. HVAC subsystem 440 can include many of the same components as HVAC system 100, as described with reference to FIGS. 1-3. For example, HVAC subsystem 440 can include a chiller, a boiler, any number of air handling units, economizers, field controllers, supervisory controllers, actuators, temperature sensors, and other devices for controlling the temperature, humidity, airflow, or other variable conditions within building 10. Lighting subsystem 442 can include any number of light fixtures, ballasts, lighting sensors, dimmers, or other devices configured to controllably adjust the amount of light provided to a building space. Security subsystem 438 can include occupancy sensors, video surveillance cameras, digital video recorders, video processing servers, intrusion detection devices, access control devices and servers, or other security-related devices.

Still referring to FIG. 4, BMS controller 366 is shown to include a communications interface 407 and a BMS interface 409. Interface 407 may facilitate communications between BMS controller 366 and external applications (e.g., monitoring and reporting applications 422, enterprise control applications 426, remote systems and applications 444, applications residing on client devices 448, etc.) for allowing user control, monitoring, and adjustment to BMS controller 366 and/or subsystems 428. Interface 407 may also facilitate communications between BMS controller 366 and client devices 448. BMS interface 409 may facilitate communications between BMS controller 366 and building subsystems 428 (e.g., HVAC, lighting security, lifts, power distribution, business, etc.).

Interfaces 407, 409 can be or include wired or wireless communications interfaces (e.g., jacks, antennas, transmitters, receivers, transceivers, wire terminals, etc.) for conducting data communications with building subsystems 428 or other external systems or devices. In various embodiments, communications via interfaces 407, 409 can be direct (e.g., local wired or wireless communications) or via a communications network 446 (e.g., a WAN, the Internet, a cellular network, etc.). For example, interfaces 407, 409 can include an Ethernet card and port for sending and receiving data via an Ethernet-based communications link or network. In another example, interfaces 407, 409 can include a Wi-Fi transceiver for communicating via a wireless communications network. In another example, one or both of interfaces 407, 409 can include cellular or mobile phone communications transceivers. In one embodiment, communications interface 407 is a power line communications interface and BMS interface 409 is an Ethernet interface. In other embodiments, both communications interface 407 and BMS interface 409 are Ethernet interfaces or are the same Ethernet interface.

Still referring to FIG. 4, BMS controller 366 is shown to include a processing circuit 404 including a processor 406 and memory 408. Processing circuit 404 can be communicably connected to BMS interface 409 and/or communications interface 407 such that processing circuit 404 and the various components thereof can send and receive data via interfaces 407, 409. Processor 406 can be implemented as a general purpose processor, an application specific integrated circuit (ASIC), one or more field programmable gate arrays (FPGAs), a group of processing components, or other suitable electronic processing components.

Memory 408 (e.g., memory, memory unit, storage device, etc.) can include one or more devices (e.g., RAM, ROM, Flash memory, hard disk storage, etc.) for storing data and/or computer code for completing or facilitating the various processes, layers and modules described in the present application. Memory 408 can be or include volatile memory or non-volatile memory. Memory 408 can include database components, object code components, script components, or any other type of information structure for supporting the various activities and information structures described in the present application. According to some embodiments, memory 408 is communicably connected to processor 406 via processing circuit 404 and includes computer code for executing (e.g., by processing circuit 404 and/or processor 406) one or more processes described herein.

In some embodiments, BMS controller 366 is implemented within a single computer (e.g., one server, one housing, etc.). In various other embodiments BMS controller 366 can be distributed across multiple servers or computers (e.g., that can exist in distributed locations). Further, while FIG. 4 shows applications 422 and 426 as existing outside of BMS controller 366, in some embodiments, applications 422 and 426 can be hosted within BMS controller 366 (e.g., within memory 408).

Still referring to FIG. 4, memory 408 is shown to include an enterprise integration layer 410, an automated measurement and validation (AM&V) layer 412, a demand response (DR) layer 414, a fault detection and diagnostics (FDD) layer 416, an integrated control layer 418, and a building subsystem integration later 420. Layers 410-420 can be configured to receive inputs from building subsystems 428 and other data sources, determine optimal control actions for building subsystems 428 based on the inputs, generate control signals based on the optimal control actions, and provide the generated control signals to building subsystems 428. The following paragraphs describe some of the general functions performed by each of layers 410-420 in BMS 400.

Enterprise integration layer 410 can be configured to serve clients or local applications with information and services to support a variety of enterprise-level applications. For example, enterprise control applications 426 can be configured to provide subsystem-spanning control to a graphical user interface (GUI) or to any number of enterprise-level business applications (e.g., accounting systems, user identification systems, etc.). Enterprise control applications 426 may also or alternatively be configured to provide configuration GUIs for configuring BMS controller 366. In yet other embodiments, enterprise control applications 426 can work with layers 410-420 to optimize building performance (e.g., efficiency, energy use, comfort, or safety) based on inputs received at interface 407 and/or BMS interface 409.

Building subsystem integration layer 420 can be configured to manage communications between BMS controller 366 and building subsystems 428. For example, building subsystem integration layer 420 may receive sensor data and input signals from building subsystems 428 and provide output data and control signals to building subsystems 428. Building subsystem integration layer 420 may also be configured to manage communications between building subsystems 428. Building subsystem integration layer 420 translate communications (e.g., sensor data, input signals, output signals, etc.) across a plurality of multi-vendor/multi-protocol systems.

Demand response layer 414 can be configured to optimize resource usage (e.g., electricity use, natural gas use, water use, etc.) and/or the monetary cost of such resource usage in response to satisfy the demand of building 10. The optimization can be based on time-of-use prices, curtailment signals, energy availability, or other data received from utility providers, distributed energy generation systems 424, from energy storage 427 (e.g., hot TES 242, cold TES 244, etc.), or from other sources. Demand response layer 414 may receive inputs from other layers of BMS controller 366 (e.g., building subsystem integration layer 420, integrated control layer 418, etc.). The inputs received from other layers can include environmental or sensor inputs such as temperature, carbon dioxide levels, relative humidity levels, air quality sensor outputs, occupancy sensor outputs, room schedules, and the like. The inputs may also include inputs such as electrical use (e.g., expressed in kWh), thermal load measurements, pricing information, projected pricing, smoothed pricing, curtailment signals from utilities, and the like.

According to some embodiments, demand response layer 414 includes control logic for responding to the data and signals it receives. These responses can include communicating with the control algorithms in integrated control layer 418, changing control strategies, changing setpoints, or activating/deactivating building equipment or subsystems in a controlled manner. Demand response layer 414 may also include control logic configured to determine when to utilize stored energy. For example, demand response layer 414 may determine to begin using energy from energy storage 427 just prior to the beginning of a peak use hour.

In some embodiments, demand response layer 414 includes a control module configured to actively initiate control actions (e.g., automatically changing setpoints) which minimize energy costs based on one or more inputs representative of or based on demand (e.g., price, a curtailment signal, a demand level, etc.). In some embodiments, demand response layer 414 uses equipment models to determine an optimal set of control actions. The equipment models can include, for example, thermodynamic models describing the inputs, outputs, and/or functions performed by various sets of building equipment. Equipment models may represent collections of building equipment (e.g., subplants, chiller arrays, etc.) or individual devices (e.g., individual chillers, heaters, pumps, etc.).

Demand response layer 414 may further include or draw upon one or more demand response policy definitions (e.g., databases, XML files, etc.). The policy definitions can be edited or adjusted by a user (e.g., via a graphical user interface) so that the control actions initiated in response to demand inputs can be tailored for the user's application, desired comfort level, particular building equipment, or based on other concerns. For example, the demand response policy definitions can specify which equipment can be turned on or off in response to particular demand inputs, how long a system or piece of equipment should be turned off, what setpoints can be changed, what the allowable set point adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and when to dispatch on-site generation of energy (e.g., via fuel cells, a motor generator set, etc.).

Integrated control layer 418 can be configured to use the data input or output of building subsystem integration layer 420 and/or demand response later 414 to make control decisions. Due to the subsystem integration provided by building subsystem integration layer 420, integrated control layer 418 can integrate control activities of the subsystems 428 such that the subsystems 428 behave as a single integrated supersystem. In some embodiments, integrated control layer 418 includes control logic that uses inputs and outputs from a plurality of building subsystems to provide greater comfort and energy savings relative to the comfort and energy savings that separate subsystems could provide alone. For example, integrated control layer 418 can be configured to use an input from a first subsystem to make an energy-saving control decision for a second subsystem. Results of these decisions can be communicated back to building subsystem integration layer 420.

Integrated control layer 418 is shown to be logically below demand response layer 414. Integrated control layer 418 can be configured to enhance the effectiveness of demand response layer 414 by enabling building subsystems 428 and their respective control loops to be controlled in coordination with demand response layer 414. This configuration may advantageously reduce disruptive demand response behavior relative to conventional systems. For example, integrated control layer 418 can be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller.

Integrated control layer 418 can be configured to provide feedback to demand response layer 414 so that demand response layer 414 checks that constraints (e.g., temperature, lighting levels, etc.) are properly maintained even while demanded load shedding is in progress. The constraints may also include setpoint or sensed boundaries relating to safety, equipment operating limits and performance, comfort, fire codes, electrical codes, energy codes, and the like. Integrated control layer 418 is also logically below fault detection and diagnostics layer 416 and automated measurement and validation layer 412. Integrated control layer 418 can be configured to provide calculated inputs (e.g., aggregations) to these higher levels based on outputs from more than one building subsystem.

Automated measurement and validation (AM&V) layer 412 can be configured to verify that control strategies commanded by integrated control layer 418 or demand response layer 414 are working properly (e.g., using data aggregated by AM&V layer 412, integrated control layer 418, building subsystem integration layer 420, FDD layer 416, or otherwise). The calculations made by AM&V layer 412 can be based on building system energy models and/or equipment models for individual BMS devices or subsystems. For example, AM&V layer 412 may compare a model-predicted output with an actual output from building subsystems 428 to determine an accuracy of the model.

Fault detection and diagnostics (FDD) layer 416 can be configured to provide ongoing fault detection for building subsystems 428, building subsystem devices (i.e., building equipment), and control algorithms used by demand response layer 414 and integrated control layer 418. FDD layer 416 may receive data inputs from integrated control layer 418, directly from one or more building subsystems or devices, or from another data source. FDD layer 416 may automatically diagnose and respond to detected faults. The responses to detected or diagnosed faults can include providing an alert message to a user, a maintenance scheduling system, or a control algorithm configured to attempt to repair the fault or to work-around the fault.

FDD layer 416 can be configured to output a specific identification of the faulty component or cause of the fault (e.g., loose damper linkage) using detailed subsystem inputs available at building subsystem integration layer 420. In other exemplary embodiments, FDD layer 416 is configured to provide "fault" events to integrated control layer 418 which executes control strategies and policies in response to the received fault events. According to some embodiments, FDD layer 416 (or a policy executed by an integrated control engine or business rules engine) may shut-down systems or direct control activities around faulty devices or systems to reduce energy waste, extend equipment life, or assure proper control response.

FDD layer 416 can be configured to store or access a variety of different system data stores (or data points for live data). FDD layer 416 may use some content of the data stores to identify faults at the equipment level (e.g., specific chiller, specific AHU, specific terminal unit, etc.) and other content to identify faults at component or subsystem levels. For example, building subsystems 428 may generate temporal (i.e., time-series) data indicating the performance of BMS 400 and the various components thereof. The data generated by building subsystems 428 can include measured or calculated values that exhibit statistical characteristics and provide information about how the corresponding system or process (e.g., a temperature control process, a flow control process, etc.) is performing in terms of error from its setpoint. These processes can be examined by FDD layer 416 to expose when the system begins to degrade in performance and alert a user to repair the fault before it becomes more severe.

Referring now to FIG. 5, a block diagram of another building management system (BMS) 500 is shown, according to some embodiments. BMS 500 can be used to monitor and control the devices of HVAC system 100, waterside system 200, airside system 300, building subsystems 428, as well as other types of BMS devices (e.g., lighting equipment, security equipment, etc.) and/or HVAC equipment.

BMS 500 provides a system architecture that facilitates automatic equipment discovery and equipment model distribution. Equipment discovery can occur on multiple levels of BMS 500 across multiple different communications busses (e.g., a system bus 554, zone buses 556-560 and 564, sensor/actuator bus 566, etc.) and across multiple different communications protocols. In some embodiments, equipment discovery is accomplished using active node tables, which provide status information for devices connected to each communications bus. For example, each communications bus can be monitored for new devices by monitoring the corresponding active node table for new nodes. When a new device is detected, BMS 500 can begin interacting with the new device (e.g., sending control signals, using data from the device) without user interaction.

Some devices in BMS 500 present themselves to the network using equipment models. An equipment model defines equipment object attributes, view definitions, schedules, trends, and the associated BACnet value objects (e.g., analog value, binary value, multistate value, etc.) that are used for integration with other systems. Some devices in BMS 500 store their own equipment models. Other devices in BMS 500 have equipment models stored externally (e.g., within other devices). For example, a zone coordinator 508 can store the equipment model for a bypass damper 528. In some embodiments, zone coordinator 508 automatically creates the equipment model for bypass damper 528 or other devices on zone bus 558. Other zone coordinators can also create equipment models for devices connected to their zone busses. The equipment model for a device can be created automatically based on the types of data points exposed by the device on the zone bus, device type, and/or other device attributes. Several examples of automatic equipment discovery and equipment model distribution are discussed in greater detail below.

Still referring to FIG. 5, BMS 500 is shown to include a system manager 502; several zone coordinators 506, 508, 510 and 518; and several zone controllers 524, 530, 532, 536, 548, and 550. System manager 502 can monitor data points in BMS 500 and report monitored variables to various monitoring and/or control applications. System manager 502 can communicate with client devices 504 (e.g., user devices, desktop computers, laptop computers, mobile devices, etc.) via a data communications link 574 (e.g., BACnet IP, Ethernet, wired or wireless communications, etc.). System manager 502 can provide a user interface to client devices 504 via data communications link 574. The user interface may allow users to monitor and/or control BMS 500 via client devices 504.

In some embodiments, system manager 502 is connected with zone coordinators 506-510 and 518 via a system bus 554. System manager 502 can be configured to communicate with zone coordinators 506-510 and 518 via system bus 554 using a master-slave token passing (MSTP) protocol or any other communications protocol. System bus 554 can also connect system manager 502 with other devices such as a constant volume (CV) rooftop unit (RTU) 512, an input/output module (IOM) 514, a thermostat controller 516 (e.g., a TEC5000 series thermostat controller), and a network automation engine (NAE) or third-party controller 520. RTU 512 can be configured to communicate directly with system manager 502 and can be connected directly to system bus 554. Other RTUs can communicate with system manager 502 via an intermediate device. For example, a wired input 562 can connect a third-party RTU 542 to thermostat controller 516, which connects to system bus 554.

System manager 502 can provide a user interface for any device containing an equipment model. Devices such as zone coordinators 506-510 and 518 and thermostat controller 516 can provide their equipment models to system manager 502 via system bus 554. In some embodiments, system manager 502 automatically creates equipment models for connected devices that do not contain an equipment model (e.g., IOM 514, third party controller 520, etc.). For example, system manager 502 can create an equipment model for any device that responds to a device tree request. The equipment models created by system manager 502 can be stored within system manager 502. System manager 502 can then provide a user interface for devices that do not contain their own equipment models using the equipment models created by system manager 502. In some embodiments, system manager 502 stores a view definition for each type of equipment connected via system bus 554 and uses the stored view definition to generate a user interface for the equipment.

Each zone coordinator 506-510 and 518 can be connected with one or more of zone controllers 524, 530-532, 536, and 548-550 via zone buses 556, 558, 560, and 564. Zone coordinators 506-510 and 518 can communicate with zone controllers 524, 530-532, 536, and 548-550 via zone busses 556-560 and 564 using a MSTP protocol or any other communications protocol. Zone busses 556-560 and 564 can also connect zone coordinators 506-510 and 518 with other types of devices such as variable air volume (VAV) RTUs 522 and 540, changeover bypass (COBP) RTUs 526 and 552, bypass dampers 528 and 546, and PEAK controllers 534 and 544.

Zone coordinators 506-510 and 518 can be configured to monitor and command various zoning systems. In some embodiments, each zone coordinator 506-510 and 518 monitors and commands a separate zoning system and is connected to the zoning system via a separate zone bus. For example, zone coordinator 506 can be connected to VAV RTU 522 and zone controller 524 via zone bus 556. Zone coordinator 508 can be connected to COBP RTU 526, bypass damper 528, COBP zone controller 530, and VAV zone controller 532 via zone bus 558. Zone coordinator 510 can be connected to PEAK controller 534 and VAV zone controller 536 via zone bus 560. Zone coordinator 518 can be connected to PEAK controller 544, bypass damper 546, COBP zone controller 548, and VAV zone controller 550 via zone bus 564.

A single model of zone coordinator 506-510 and 518 can be configured to handle multiple different types of zoning systems (e.g., a VAV zoning system, a COBP zoning system, etc.). Each zoning system can include a RTU, one or more zone controllers, and/or a bypass damper. For example, zone coordinators 506 and 510 are shown as Verasys VAV engines (VVEs) connected to VAV RTUs 522 and 540, respectively. Zone coordinator 506 is connected directly to VAV RTU 522 via zone bus 556, whereas zone coordinator 510 is connected to a third-party VAV RTU 540 via a wired input 568 provided to PEAK controller 534. Zone coordinators 508 and 518 are shown as Verasys COBP engines (VCEs) connected to COBP RTUs 526 and 552, respectively. Zone coordinator 508 is connected directly to COBP RTU 526 via zone bus 558, whereas zone coordinator 518 is connected to a third-party COBP RTU 552 via a wired input 570 provided to PEAK controller 544.

Zone controllers 524, 530-532, 536, and 548-550 can communicate with individual BMS devices (e.g., sensors, actuators, etc.) via sensor/actuator (SA) busses. For example, VAV zone controller 536 is shown connected to networked sensors 538 via SA bus 566. Zone controller 536 can communicate with networked sensors 538 using a MSTP protocol or any other communications protocol. Although only one SA bus 566 is shown in FIG. 5, it should be understood that each zone controller 524, 530-532, 536, and 548-550 can be connected to a different SA bus. Each SA bus can connect a zone controller with various sensors (e.g., temperature sensors, humidity sensors, pressure sensors, light sensors, occupancy sensors, etc.), actuators (e.g., damper actuators, valve actuators, etc.) and/or other types of controllable equipment (e.g., chillers, heaters, fans, pumps, etc.).

Each zone controller 524, 530-532, 536, and 548-550 can be configured to monitor and control a different building zone. Zone controllers 524, 530-532, 536, and 548-550 can use the inputs and outputs provided via their SA busses to monitor and control various building zones. For example, a zone controller 536 can use a temperature input received from networked sensors 538 via SA bus 566 (e.g., a measured temperature of a building zone) as feedback in a temperature control algorithm. Zone controllers 524, 530-532, 536, and 548-550 can use various types of control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control a variable state or condition (e.g., temperature, humidity, airflow, lighting, etc.) in or around building 10.

### Web Services System with Virtual Device Platform

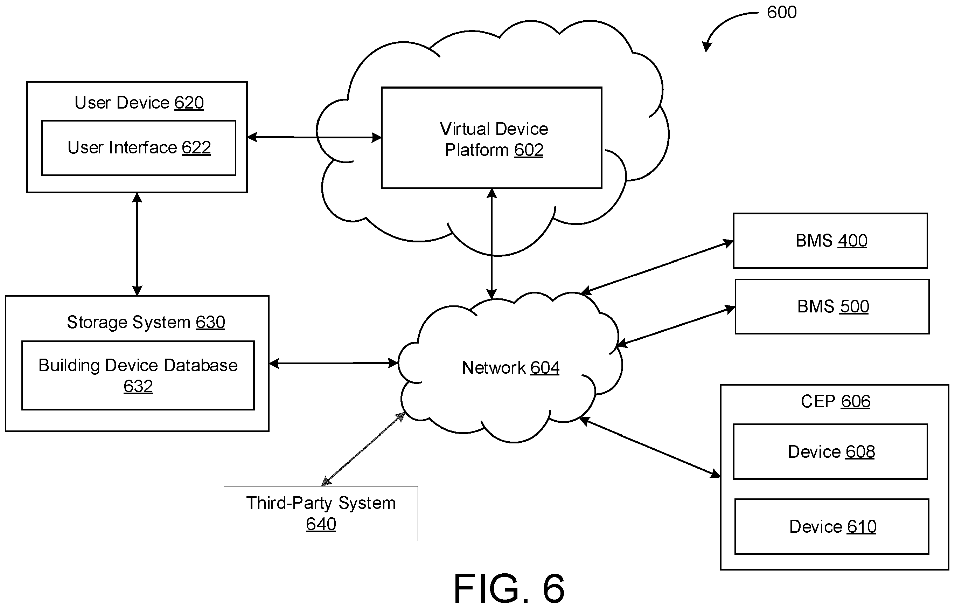

Referring now to FIG. 6, a block diagram of a web services system 600 is shown, according to an exemplary embodiment. The web services system 600 is shown to include a virtual device platform 602, one or more building management systems (e.g., the BMS 400, the BMS 500, etc.), a network 604, and a connected equipment platform (herein after "CEP 606") having a first device 608 and/or a second device 610. The web services system 600 may also include a user device 620 having a user interface 622, and a storage system 630 having a building device database 632, and a third-party system 640. As will be discussed in greater detail below, the virtual device platform 602 may be configured to obtain data relating to a device from a variety of sources, generate a virtual device representing the physical device, determine a device rating of the virtual device, compare the virtual device rating to actual operating conditions of the device, and initiate an automated action based on the comparison of the virtual device rating to actual operating conditions of the device.

According to an exemplary embodiment, the virtual device platform 602 is configured to communicate with components of one or more building management systems (e.g., the BMS 400 of FIG. 4, the BMS 500 of FIG. 5, etc.). In an exemplary embodiment, the virtual device platform 602 communicates with components of the building subsystems 428 of the BMS 400 (e.g., via the network 604, the BMS controller 366, etc.). For example, the virtual device platform 602 may communicate with components of the building electrical subsystem 434, the information communication technology (ICT) subsystem 436, the security subsystem 438 (e.g., occupancy sensors, video surveillance cameras, digital video recorders, video processing servers, intrusion detection devices, access control devices and servers, and/or other security-related devices, etc.), the HVAC subsystem 440 (e.g., chillers, heaters, air handling units, pumps, fans, thermal energy storage, etc., and/or any other device configured to provide heating, cooling, ventilation, or other services for a building, etc.), the lighting subsystem 442 (e.g., light fixtures, ballasts, lighting sensors, dimmers, or other devices configured to controllably adjust the amount of light to a building, etc.), the lift/escalators subsystem 432, the fire safety subsystem 430 (e.g., fire detection devices, fire notification devices, fire suppression devices, etc.), and/or a device of any other system that is capable of managing building functions or devices. In some embodiments, the virtual device platform 602 communicates with components of the BMS 500 (e.g., via the network 604, etc.), for example the system manager 502. In some embodiments, the virtual device platform 602 communicates with other components of the BMS 400 (e.g., the BMS controller 366, the memory 408, etc.), the BMS 500, and/or another suitable building management system.

In some embodiments, the virtual device platform 602 is also configured to communicate with the CEP 606 and/or components thereof (e.g., via the network 604, etc.). According to an exemplary embodiment, the CEP 606 communicably connects one or more devices (e.g., the device 608, the device 610, etc.) as a network, platform, and/or community of devices. The CEP 606 may be configured to receive and/or analyze data relating to the one or more devices of the CEP 606 (e.g., the device 608, the device 610, etc.). For example, the CEP 606 may receive and/or analyze data relating to device type, family, model, application, location of use, characteristics of a device (e.g., performance, power consumption, whether the device includes a noise reduction kit, type of refrigerant, fans, coils, etc., a device's full load standard, conditions, capacity, etc.), and/or any other suitable characteristic relating to a device. Further, the CEP 606 may receive and/or analyze information relating to building load requirements (e.g., heating, cooling, electricity, energy, etc. loads), and communicably connect one or more devices so as to satisfy the building load requirements. The CEP 606 may also communicate the information relating to the one or more devices (e.g., via the network 604, etc.) to the virtual device platform 602. According to an exemplary embodiment, the device 608 and/or the device 610 is/are a chiller of the BMS 400, the BMS 500, and/or another suitable building management system. In some embodiments, the device 608 and/or the device 610 is/are another device of an HVAC system (e.g., heater, air handling unit, pumps, fan, thermal energy storage, etc., and/or any other device configured to provide heating, cooling, ventilation, or other services for a building). In other embodiments, the device 608 and/or the device 610 is/are a device of an energy generation and/or storage system, a security system, a lighting system, a fire alerting system, and/or a device of any other system capable of managing building functions or devices, or any combination thereof. In yet other embodiments, the device 608 and/or the device 610 is/are an internet of things (IoT) device capable of communicating with the virtual device platform 602 (e.g., via the network 604).

As shown in FIG. 6, the virtual device platform 602 is also configured to communicate with the user device 620. The user device 620 may include one or more human-machine interfaces or client interfaces, shown as user interface 622 (e.g., a graphical user interface, reporting interface, text-based computer interface, client-facing web service, web servers that provide pages to web client, etc.) for controlling, viewing, and/or otherwise interacting with the virtual device platform 602. The user device 620 may be a computer workstation, a client terminal, a remote or local interface, and/or any other type of user interface device. The user device 620 may also be a stationary terminal, or a mobile device. For example, the user device 620 may be a desktop computer, a computer server with a user interface, a laptop computer, a tablet, a smartphone, a PDA, and/or any other type of mobile or non-mobile device.

In an exemplary embodiment, the virtual device platform 602 is also configured to communicate with the storage system 630 (e.g., having the building device database 632), either directly (e.g., via the network 604) or indirectly (e.g., via the user device 620). The storage system 630 may include one or more devices (e.g., RAM, ROM, Flash memory, hard disk storage, etc.) for storing data and/or computer code for completing and/or facilitating the various processes, layers, and modules described herein. The storage system 630 may be or include volatile memory or non-volatile memory, and may include database components, object code components, script components, and/or any other type of information structure for supporting the various activities and information structures described herein.

As shown in FIG. 6, the virtual device platform 602 is also configured to communicate with the third-party system 640. In an exemplary embodiment, the third-party system 640 is a system provided (e.g., owned, operated, manufactured, serviced, maintained, etc.) by an entity (e.g., third party) other than the entity that provides the virtual device platform 602. For example, the third party may include a third-party manufacturer, distributor, service provider, maintenance provider, or any other suitable third-party entity that provides a product or service, other than the provider of the virtual device platform 602. In some embodiments, the third-party system 640 is a building management system or subsystem (e.g., electrical, security, HVAC, lighting, lift/escalator, etc. subsystem). In other embodiments, the third-party system 640 is a device or component thereof (e.g. chiller, heat pump, heaters, air-handling units, pumps, fans, etc.). In some embodiments, the third-party system 640 is integrated with the BMS 400, the BMS 500, and/or the CEP 606 (e.g., the device 608, the device 610, etc.). For example, the third-party system 640 may be a component of the device 608 and/or the device 610, or a device of the BMS 400 and/or the BMS 500. In other embodiments, the third-party system 640 is a product or service that supports the BMS 400, the BMS 500, and/or the CEP 606 (e.g., the device 608, the device 610), for example a service or maintenance platform.

According to an exemplary embodiment, and as will be discussed in greater detail below, the virtual device platform 602 is also configured to generate data. For example, the virtual device platform 602 may include components (e.g., a device state analyzer, a device balancing module, a ratings input module, a ratings engine, a ratings database, a comparison analyzer, a performance analyzer, etc.) that obtain, analyze, process, generate, store, and/or communicate data. The data generated by the virtual device platform 602 may be analyzed, processed, stored, etc. along with the data received from other data sources discussed above. Further, the virtual device platform 602 may communicate data generated by the virtual device platform 602, for example to initiate an automated action by one or more components of the web services system 600 (e.g., control a device of the BMS 400, the BMS 500, the CEP 606, the third-party system 640, etc., provide instructions to the user device 620, provide information to store in the storage system 630 for subsequent analysis, etc.).

### Virtual Device Platform

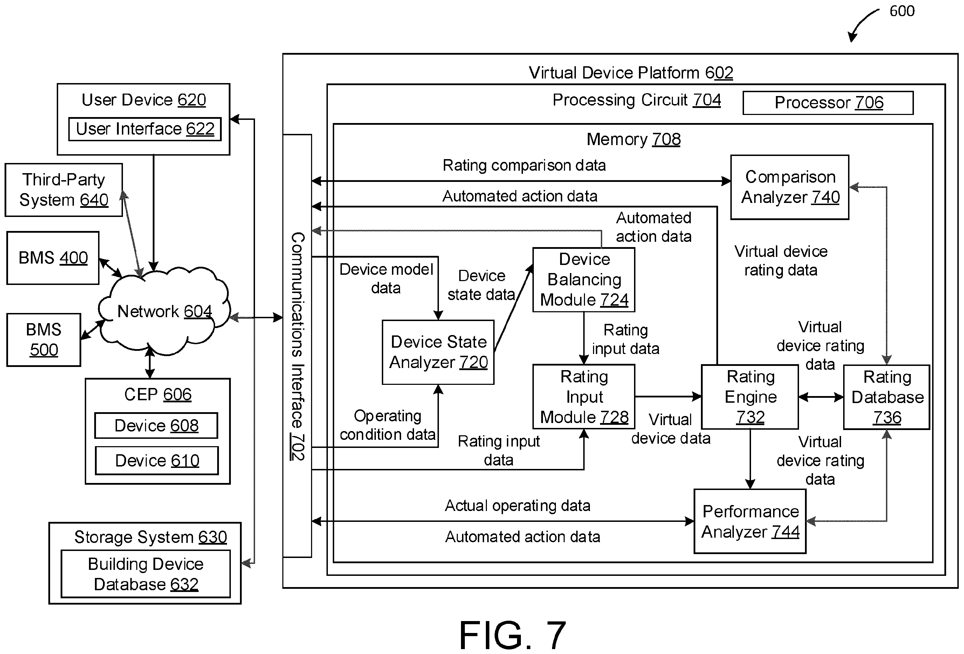

Referring now to FIG. 7, a block diagram illustrating the virtual device platform 602 in greater detail is shown, according to an exemplary embodiment. As discussed above, the virtual device platform 602 may be configured to obtain data relating to a physical device from a variety of sources, generate a virtual device representing the physical device, determine a device rating of the virtual device, compare the virtual device rating to actual operating conditions of the device, and initiate an automated action based on the comparison of the virtual device rating to actual operating conditions of the device. As will be discussed in greater detail below, in some embodiments the virtual device platform 602 is also configured to determine a state of the physical device (e.g., a steady state, a transient state, etc.). The virtual device platform 602 may also be configured to determine additional rating information to be used in running a device rating, for example an operating capacity of the physical device, a load applied at the physical device, a flow rate of a fluid of the physical device, etc. Further, the virtual device platform 602 may be configured to determine whether the actual operating conditions of the physical device are within a predetermined threshold compared to the device rating of the virtual device, and/or initiate an automated action based on the determination (e.g., provide an indication that the physical device is operating as expected, control a component of the physical device to bring the device performance in accordance with the expected performance, etc.). In this regard, the virtual device platform 602 may be configured to evaluate and/or control a physical device based on actual characteristics (e.g., performance) of the physical device.

In some embodiments, the virtual device platform 602 is also configured to generate a digital twin of a physical device that integrates inferences and predictions with three-dimensional models of a physical device. The digital twin can be a virtual representation of a device (and/or building, piece of building equipment, etc.), and/or may represent a service performed by the device. In some embodiments, the virtual device platform 602 is configured to generate a digital twin that includes artificial intelligence (AI), for example an AI agent, which can call an AI service to determine inferences and/or predict future data values (e.g., potential future states, conditions, etc.). In some embodiments, the virtual device platform 602 generates a digital twin that can be used to determine a device rating of the digital twin and/or operate against the predicted and/or inferred data (e.g., rating data), for example to construct or update the performance of a rating engine (e.g., rating engine weights, etc.) and/or train an AI interface model. The virtual device platform 602 may generate a digital twin that includes an AI agent that relates internal and/or external information to the digital twin, for example, device or component age, device or component use records, device location, weather data from a weather data source, maintenance subscriptions, maintenance records, occupancy space the digital twin is located, etc. In other embodiments, the virtual device platform 602 generates a digital twin that represents operating conditions and/or performance of a physical device, and operates the digital twin against predicted and/or inferred data, for example as feedback for the design of the physical device (e.g., or components thereof). In some embodiments, the virtual device platform 602 generates a digital twin of a physical device using the systems, processes, and/or techniques described in U.S. Patent Application No. 17/537,046, titled "Building Data Platform with Digital Twin Based Inferences and Predictions for a Graphical Building Model," filed November 29, 2021, and/or U.S. Patent Application No. 17/134,661, titled "Building Data Platform with a Graph Change Feed," filed December 28, 2020, the entire disclosures of which are incorporated by reference herein.

As shown in FIG. 7, the virtual device platform 602 is communicably connected to the BMS 400 and the BMS 500 (e.g., via the network 604), the CEP 606 and devices 608, 610 (e.g., via the network 604), the user device 620, the storage system 630, and the third-party system 640. In some embodiments, the virtual device platform 602 is also communicably connected to other suitable systems and/or devices (e.g., via the network 604). It should be understood that some or all of the components of the virtual device platform 602, the BMS 400, the BMS 500, the CEP 606, the user device 620, the storage system 630, the third-party system 640, the network 604, etc. may be implemented as part of a cloud-based computing system configured to obtain, process, and/or communicate data from one or more external devices or sources. Similarly, some or all of the components of the virtual device platform 602, the BMS 400, the BMS 500, the CEP 606, the user device 620, the storage system 630, the third-party system 640, the network 604, etc. may be integrated within a single device, or be distributed across multiple separate systems or devices. In some embodiments, some or all of the components of the virtual device platform 602, the CEP 606, the user device 620, the storage system 630, the third-party system 640, etc. are components of a subsystem level controller, a plant controller, a device controller, a field controller, a computer workstation, a client device, and/or another system or device that receives, processes, and/or communicates data from/to devices or other data sources.

The virtual device platform 602 is shown to include a communications interface 702 and a processing circuit 704 having a processor 706 and a memory 708. The communications interface 702 may include wired or wireless communications interfaces (e.g., jacks, antennas, transmitters, receivers, transceivers, wire terminals, etc.) for communicating data between the virtual device platform 602 and external systems and/or devices (e.g., the BMS 400, the BMS 500, the CEP 606, the user device 620, the storage system 630, the third-party system 640, etc.). In some embodiments, the communications interface 702 facilitates communication between the virtual device platform 602 and external applications (e.g., remote systems and applications), so as to allow a remote user to control, monitor, and/or adjust components of the virtual device platform 602. Communications conducted via the communications interface 702 may be direct (e.g., local wired or wireless communications) or via the network 604 (e.g., a WAN, the Internet, a cellular network, etc.). Further, the communications interface 702 may be configured to communicate with external systems and/or devices using any of a variety of communications protocols (e.g., HTTP(S), WebSocket, CoAP, MQTT, etc.), industrial control protocols (e.g., MTConnect, OPC, OPC-UA, etc.), process automation protocols (e.g., HART, Profibus, etc.), home automation protocols, and/or any of a variety of other protocols. Advantageously, the virtual device platform 602 may obtain, ingest, and process data from any type of system or device, regardless of the communications protocol used by the system or device.

According to an exemplary embodiment, the virtual device platform 602 is configured to communicate with the BMS 400 and/or the BMS 500 (e.g., via the network 604, the communications interface 702, etc.). The virtual device platform 602 may obtain (e.g., receive, request, pull, etc.) input data from the BMS 400 and/or the BMS 500, which may include data from any number of devices, controllers, and/or connections of the BMS 400 and/or the BMS 500 (e.g., the BMS controller 366, the system manager 502, components of the HVAC subsystem 440, the security subsystem 438, the lighting subsystem 442, the fire safety subsystem 430, etc.). As will be discussed in greater detail below, the virtual device platform 602 may receive input data that includes device model data relating to a device of the BMS 400 and/or the BMS 500 (e.g., a chiller, a heat pump, a heater, a pump, a cooling tower, etc.). Further, the virtual device platform 602 may receive input data that includes operating condition data of a device of the BMS 400 and/or the BMS 500 (e.g., a chiller, a heat pump, a heater, a pump, a cooling tower, etc.). According to an exemplary embodiment, the virtual device platform 602 is also configured to communicate automated action data to components of the BMS 400 and/or the BMS 500, as will be discussed below.

As shown in FIG. 7, the virtual device platform 602 is also configured to communicate with the CEP 606 and/or components thereof (e.g., via the network 604, the communications interface 702, etc.). As discussed above, the CEP 606 may communicably connect one or more devices (e.g., the device 608, the device 610, etc.) as a network, platform, and/or community of devices. In an exemplary embodiment, the CEP 606 receives, analyzes, and/or communicates data relating to the one or more devices of the CEP 606. For example, the CEP 606 may connect a plurality of chillers and/or heat pumps (e.g., the device 608, the device 610, etc.) operating in various buildings. The CEP 606 may receive and/or analyze device model data, operating condition data, building load requirement data, etc., and/or communicate information (e.g., data) relating to each of the plurality of chillers to other components of the web services system 600 (e.g., the virtual device platform 602). As will be discussed in greater detail below, in an exemplary embodiment the CEP 606 communicates data that includes device model data of a device of the CEP 606 to the virtual device platform 602. The CEP 606 may also communicate operating condition data of a device of the CEP 606 to the virtual device platform 602. Further, the CEP 606 may analyze data from a device of the CEP 606 (e.g., operating condition data) and/or data from the virtual device platform 602 (e.g., device rating data, etc.), and communicate comparison data to the virtual device platform 602. According to an exemplary embodiment, the virtual device platform 602 is also configured to communicate automated action data to the CEP 606 and/or components thereof (e.g., the device 608, the device 610, etc.), as will be discussed below.

According to an exemplary embodiment, the virtual device platform 602 is also configured to communicate with the user device 620. As discussed above, the user device 620 may include a user interface, shown as the user interface 622, and/or additional applications, programs, or interfaces (e.g., application programing interfaces, etc.). The user device 620 may be a computing device having a memory (e.g., RAM, ROM, Flash memory, hard disk storage, etc.), a processor (e.g., a general purpose processor, an application specific integrated circuit (ASIC), one or more field programmable gate arrays (FPGAs), a group of processing components (or other suitable electronic processing components), and/or an interface (e.g., a touch screen). The user interface 622 may enable a user to interact with the virtual device platform 602. In an exemplary embodiment, the user interface 622 allows a user to input information relating to one or more devices or pieces of building equipment, for example information relating to a device model, actual device operating conditions, desired operating conditions, trainable model characteristics, etc. In some embodiments, the user interface 622 is configured to communicate information (e.g., via a graphical user interface, an alarm, a message, etc.) to a user based on an automated action received at the user device 620 from the virtual device platform 602, as discussed below.

As shown in FIG. 7, the virtual device platform 602 is further configured to communicate with the storage system 630. The storage system 630 is shown to include the building device database 632, which may receive, store, and/or communicate data relating to one or more devices. For example, the building device database 632 may receive and store device model data relating to one or more devices of the BMS 400, the BMS 500, the CEP 606 (e.g., the device 608, the device 610, etc.), and/or another suitable device or piece of building equipment. The building device database 632 may also receive and store operating condition data relating to one or more devices of the BMS 400, the BMS 500, the CEP 606 (e.g., the device 608, the device 610, etc.), etc. In an exemplary embodiment, the building device database 632 receives and/or stores a database of all possible device operating condition data (e.g., all possible operating conditions) relating to one or more devices of the BMS 400, the BMS 500, the CEP 606 (e.g., the device 608, the device 610, etc.), etc. In some embodiments, the building device database 632 (e.g., the storage system 630) is configured to communicate the device model data, the operating condition data, and/or the database of possible device operating condition data to other systems and/or devices (e.g., the virtual device platform 602). In yet other embodiments, the building device database 632 receives and stores automated action data from the virtual device platform 602, as discussed below.

According to an exemplary embodiment, the virtual device platform 602 is also configured to communicate with the third-party system 640 (e.g., via the network 604, the communications interface 702, etc.). The virtual device platform 602 may obtain (e.g., receive, request, pull, etc.) data from the third-party system 640, which may include data from any number of systems, subsystems, devices, controllers, components, and/or connections of the third-party system 640. As noted above, the third-party system 640 may be integrated with, and/or support, the BMS 400, the BMS 500, and/or the CEP 606 (e.g., the device 608, the device 610, etc.). Accordingly, the virtual device platform 602 may receive data (e.g., via the third-party system 640) that includes device model data and/or operating condition data relating to a device of the BMS 400, the BMS 500, and/or the CEP 606. Further, the virtual device platform 602 may receive other data (e.g., building load requirement, operating capacity, performance, etc. data) from the third-party system 640 that may related to a device or system of the BMS 400, the BMS 500, and/or the CEP 606.

Referring still to FIG. 7, the virtual device platform 602 is generally shown to include the processing circuit 704 having the processor 706 and the memory 708. While shown as single components, it will be appreciated that the virtual device platform 602 may include one or more processing circuits including one or more processors and memory. In some embodiments, the virtual device platform 602 includes a plurality of processors, memories, interfaces, and other components distributed across multiple devices or systems that are communicably coupled via the network 604. For example, in a cloud-based or distributed implementation, the virtual device platform 602 may include multiple discrete computing devices, each of which includes a processor 706, memory 708, communications interface 702, and/or other components of the virtual device platform 602 that are communicably coupled via the network 604. Tasks performed by the virtual device platform 602 may be distributed across multiple systems or devices, which may be located within a single building or facility, or distributed across multiple buildings or facilities. In other embodiments, the virtual device platform 602 itself is implemented within a single computer (e.g., one server, one housing, etc.). All such implementations are contemplated herein.

The processor 706 may be a general purpose or specific purpose processor, an application specific integrated circuit (ASIC), one or more field programmable gate arrays (FPGAs), a group of processing components, or other suitable processing components. The processor 706 may further be configured to execute computer code or instructions stored in the memory 708 or received from other computer readable media (e.g., CDROM, network storage, a remote server, etc.).

The memory 708 may include one or more devices (e.g., memory units, memory devices, storage devices, etc.) for storing data and/or computer code for completing and/or facilitating the various processes described in the present disclosure. The memory 708 may include random access memory (RAM), read-only memory (ROM), hard drive storage, temporary storage, non-volatile memory, flash memory, optical memory, or any other suitable memory for storing software objects and/or computer instructions. In some embodiments, the memory 708 includes database components, object code components, script components, and/or any other type of information structure for supporting the various activities and information structures described in the present disclosure. The memory 708 may be communicably connected to the processor 706 via the processing circuit 704, and may include computer code for executing (e.g., by the processor 706) one or more processes described herein. When the processor 706 executes instructions stored in the memory 708, the processor 706 may generally configure the processing circuit 704 to complete such activities.

Referring still to FIG. 7, the virtual device platform 602 (e.g., the memory 708) is shown to include a device state analyzer 720, a device balancing module 724, a rating input module 728, a rating engine 732, a rating database 736, a comparison analyzer 740, and a performance analyzer 744. As discussed above, the virtual device platform 602 (e.g., components 720-744, etc.) may be configured to obtain data relating to a physical device from a variety of sources (e.g., the BMS 400, the BMS 500, the CEP 606, the third-party system 640, and/or components thereof, the user device 620, the storage system 630, etc.), generate a virtual device representing the physical device, determine a device rating of the virtual device, compare the virtual device rating to actual operating conditions of the device, and initiate an automated action based on the comparison of the virtual device rating to actual operating conditions of the device. In some embodiments, the virtual device platform is also configured to determine a state of the physical device (e.g., a steady state, transient state, etc.), determine additional rating information to be used in running a device rating (e.g., an operating capacity of the physical device, a load applied at the device, a flow rate of a fluid of the device, etc.), and/or determine whether the actual characteristics (e.g., performance) of the physical device are within a predetermined threshold compared to the expected characteristics of the device (e.g., expected performance based on a rating of the virtual device, etc.). The following paragraphs describe some of the general functions performed by each of the components 720-744 of the virtual device platform 602.

According to an exemplary embodiment, the device state analyzer 720 is configured to obtain input data relating to a device, analyze the input data, and determine a state or condition of the device. In an exemplary embodiment, the device state analyzer 720 obtains (e.g., receives, requests, pulls, etc.) input data from components of the web services system 600 (e.g., via the network 604, the communications interface 702, etc.). For example, the device state analyzer 720 may obtain input data from components of the BMS 400 and/or the BMS 500 (e.g., the BMS controller 366, the system manager 502, components of the HVAC subsystem 440, the security subsystem 438, the lighting subsystem 442, the fire safety subsystem 430, etc.), the CEP 606 and/or components thereof (e.g., the device 608, the device 610, etc.), the user device 620 (e.g., via the user interface 622), the third-party system 640 (e.g., a system or device thereof), and/or the storage system 630 (e.g., the building device database 632). In an exemplary embodiment, the device state analyzer 720 is configured to obtain (e.g., retrieve, pull, request, etc.) input data from on-site components of the BMS 400 and/or the BMS 500 (e.g., a meter, sensor, gauge, valve, etc.). In other embodiments, the device state analyzer 720 is configured to obtain (e.g., retrieve, pull, request, etc.) input data from a system or device of the third-party system 640. The input data may include, for example device model data, operating condition data (e.g., including third-party component or device data), and/or any other suitable data relating to a device and/or a piece of building equipment. In some embodiments, the input data includes data relating to a plurality of devices (e.g., a plurality of device models relating to a plurality of devices, a plurality of operating conditions relating to each of the plurality of devices, and/or other suitable data, etc.).

In an exemplary embodiment, the device model data includes a device model that indicates an expected performance of a device under certain operating conditions. The device model may include standard model characteristics that relate the optimal performance of a device to the properties of the device under specific (e.g., design) conditions. For example, the device model may include model characteristics that relate optimal performance of a device (e.g., thermal, mechanical, hydroelectric, etc. output, efficiency, etc.) to the properties of the device (e.g., device type, family, model, application, location of use, power consumption, components of the device, physical properties of the device, thermodynamic properties of the device, etc.) under specific conditions (e.g., design operating conditions, etc.). In this regard, the device model and/or standard model characteristics may model the expected performance of a device based on the properties of the device under design operating conditions. In some embodiments, the device model includes standard model characteristics that relate the optimal cost of a device to the properties of the device under certain conditions. For example, the device model may include model characteristics that relate optimal cost of a device (e.g., maximum, minimum, desired, etc.) to the properties of the device under specific conditions (e.g., design operating conditions). In other embodiments, the device model includes a set of trainable model characteristics that are generated by fitting a device model to a set of training data (e.g., training data that includes an optimal device performance, device properties, design operating conditions, etc.). In this regard, the device model may be trained to reflect an optimal performance (or cost) of a device under specific (e.g., design) operating conditions. However, as will be discussed in greater detail below, in some circumstances the expected performance of a device (e.g., based on the device model, under design operating conditions, etc.) does not accurately reflect the actual performance of a device under actual operating conditions (e.g., in certain locations, under certain conditions or settings, using certain parameters, etc.).

In an exemplary embodiment, the operating condition data includes the actual operating conditions (e.g., characteristics) under which the device is operating. For example, the operating condition data may include information relating to device and/or component temperatures (e.g., refrigerant temperatures, cold water supply temperatures, hot water supply temperatures, supply air temperatures, zone temperatures, etc.), pressures (e.g., evaporator pressure, condenser pressure, supply air pressure, etc.), flow rates (e.g., cold water flow rates, hot water flow rates, refrigerant flow rates, supply air flow rates, etc.), valve positions, resource consumptions (e.g., power consumption, water consumption, electricity consumption, etc.), control setpoints, model parameters (e.g., regression model coefficients), and/or any other data that provides information about how the corresponding device is operating. In some embodiments, the operating condition data includes information relating to device and/or component load requirements, building temperature setpoints, occupancy data, weather data, energy data, schedule data, and/or other building parameters. In some embodiments, the operating condition data is characterized (e.g., analyzed via the device state analyzer 720) based on the input source. For example, the operating condition data, or a subset thereof, may be characterized based on whether the data is obtained (e.g., retrieved, pulled, received, etc.) from a component or device of the third-party system 640, or another component of the web services system 600 (e.g., the BMS 400, the BMS 500, the CEP 606, etc.).

According to an exemplary embodiment, the device state analyzer 720 is also configured to analyze the input data (e.g., device model data, operating condition data, etc.), and determine the state or condition of the device. For example, the device state analyzer 720 may determine whether the device is in a steady state (or a transient state). As used herein, a steady state refers to a state in which one or more monitored variables associated with the operation of a component of a device are substantially unchanging or changing very slightly in time. A transient state refers to a state in which one or more monitored variables associated with the operation of a component of the device are changing considerably in time and have not reached the steady state. The monitored variables during the steady state may reflect the normal operation of the device, and the monitored variables during the transient state may reflect abnormal operation (which may sometimes be mistakenly considered as faults). According to an exemplary embodiment, various systems and/or processes described herein are implemented when a device is in a steady state. For example, if the device state analyzer 720 determines a device is in a steady state, the device state analyzer 720 may communicate device state data (e.g., including device model data, operating condition data, etc.) to other components of the virtual device platform 602 (e.g., the device balancing module 724, etc.). In other embodiments, if the device state analyzer 720 determines a device is in a transient state, the device state analyzer 720 may communicate with the device and/or components of other systems (e.g., the BMS 400, the BMS 500, the CEP 606, the third-party system 640, etc.), so as to modify the operating conditions of the device (e.g., to bring the device to a steady state).

The device state analyzer 720 may include a predictive diagnostic system that includes various modelers that use monitored variables (e.g., monitored variables associated with a steady state) for estimating parameters of a device. For example, the modelers may use monitored variables for estimating parameters in first principle models, estimating coefficients in regression models, calculating mass and energy balances, building principal component analysis (PCA) models, building partial least squares (PLS) models, etc. The device state analyzer 720 may use the detection, diagnosis, and/or prediction provided by the predictive diagnostic system to determine whether the device is in a steady state (or a transient state). In some embodiments, the device state analyzer 720 determines the state of a device using the systems, processes, and/or techniques described in U.S. Patent No. 10,495,334, titled "Systems and Methods for Steady State Detection," filed March 3, 2017, the entire disclosure of which is incorporated by reference herein.

According to an exemplary embodiment, the device balancing module 724 is configured to obtain device state data relating to a device, analyze the data, and determine additional device rating information (e.g., data) needed to run a device rating. In an exemplary embodiment, the device balancing module 724 obtains (e.g., receives, requests, pulls, etc.) device state data from one or more components of the web services system 600. For example, the device balancing module 724 may obtain device state data from the device state analyzer 720, a component of the BMS 400 and/or the BMS 500 (e.g., the BMS controller 366, the system manager 502, etc.), the CEP 606 (e.g., the device 608, the device 610), the third-party system 640, the storage system 630, and/or any other suitable system or device. The device state data may include the device model data, the device operating condition data, and/or any other suitable data relating to the operation of the device (e.g., condition or state data derived from the device state analyzer 720, including temperatures, pressures, positons, power, etc.). In an exemplary embodiment, the device balancing module 724 is configured to obtain the device state data when the device is determined to be in a steady state (e.g., via the device state analyzer 720, etc.); however, in other embodiments the device balancing module 724 obtains the device state data when the device is in another state (e.g., a transient state, etc.).

In an exemplary embodiment, the device balancing module 724 is also configured to analyze the device state data (e.g., device model data, device operating condition data, etc.), and determine additional rating data to be used in running a device rating, as discussed below. The additional rating data may include, for example an operating capacity of a device (e.g., operating at 10%, 15%, 25%, 50%, etc. capacity), a load applied at a device (e.g., a heating, cooling, electricity, energy, etc. load), a flow rate of a fluid of the device (e.g., a refrigerant flow, etc.), and/or any other suitable information relating to a device that may be used in rating a device. In an exemplary embodiment, the device balancing module 724 determines (e.g., predicts, estimates, forecasts, etc.) additional rating data as a function of the device state data and/or one or more models (e.g., a predictive model used to determine a device rating, an equipment model, a device model, a regression model, a deterministic load model, etc.). In this regard, the device balancing module 724 may determine (e.g., predict, estimate, forecast, etc.) additional rating data that may not otherwise be obtained from other components of the web services system 600 (e.g., components of the BMS 400, the BMS 500, the CEP 606, the third-party system 640, etc.) via the device state data and/or one or more models.

As an illustrative example, in an exemplary embodiment the device balancing module 724 determines (e.g., calculates, predicts, estimates, forecasts, etc.) additional rating data relating to a capacity of a device based on the device model data and one or more models or equations (e.g., a predictive model, equipment model, device model, regression model, state equations, thermodynamic equations, etc.). For example, the device balancing module 724 may determine (e.g., predict, estimate, forecast) a cooling capacity of a chiller or a heating capacity of a heater based on the device model data and one or more state equations. In some embodiments, the device balancing module 724 determines the capacity of a device using the systems, processes, and/or techniques described in U.S. Patent No. 9,612,601, titled "Systems and Methods for Adaptive Capacity Constraint Management," filed January 16, 2015, the entire disclosure of which is incorporated by reference herein.

In some embodiments, the device balancing module 724 is further configured to analyze the device state data (e.g., device model data, device operating condition data, etc.) and the additional rating data, and determine one or more characteristics of the device. For example, the device balancing module 724 may analyze the device state data and the additional rating data (e.g., compare, using one or more models or equations, etc.), to determine an operating capacity as a percentage of design capacity, a device efficiency profile, or another suitable characteristic of the device. The device balancing module 724 may generate one or more profiles, or graphical representations of the determined characteristics (e.g., operating capacity, device efficiency, etc.), which may be communicated to and/or displayed on an interface.

In other embodiments, the device balancing module 724 is also configured to analyze the device state data and the additional rating data, and initiate an automated action based on the analysis. For example, the device balancing module 724 may analyze the device state data (e.g., device model data and/or the device operating condition data) and/or the additional rating data (e.g., estimated operating capacity, load, flow rate, etc. data) as a function of one or more models or equations (e.g., a predictive model, equipment model, device model, regression model, state equations, thermodynamic equations, etc.). The device balancing module 724 may further compare the device state data and the additional rating data to determine whether the device state data is within a predetermined threshold compared to the additional rating data. In an exemplary embodiment, the device balancing module 724 may compare the device state data and the additional rating data, and initiate an automated action based on the comparison. The automated action may include providing a fault detection or diagnostic indication (e.g., alarm, alert, message, warning, notification, etc.), generating or providing control signals to a system or device (e.g., a component of the BMS 400, the BMS 500, the CEP 606, the third-party system 640, etc.), generating or providing a user interface to present a graphical representation of the comparison data (e.g., a device profile GUI on the user interface 622, etc.), generating an indication to flag a device or system for maintenance, and/or another suitable indication or control signal. For example, the device balancing module 724 may determine (e.g., predict, estimate, forecast) a cooling capacity of a chiller, compare the determined cooling capacity of the chiller to the current cooling capacity conditions (e.g., via the device operating condition data), and generate or provide a notification (e.g., alert, message, alarm) indicating a fault has been detected based on the comparison. In some embodiments, the device balancing module 724 analyzes the device state data and the additional rating data, and/or initiates an automated action based on the analysis using the systems, processes, and/or techniques described in U.S. Patent No. 9,696,073, filed December 16, 2014, entitled "Fault Detection and Diagnostic System for a Refrigeration Circuit," and/or U.S. Patent No. 11,221,156, filed April 19, 2019, entitled "Central Plant Control System with Decaying Capacity Adjustment," the entire disclosures of which are incorporated by reference herein.

In an exemplary embodiment, the device balancing module 724 is also configured to combine the device state data and the additional rating data (e.g., into rating input data), and communicate the rating input data to other components of the virtual device platform 602 (e.g., the rating input module 728, etc.). In this regard, the device balancing module 724 may determine and/or combine groups of data to form a dataset (e.g., rating input data, etc.) that may be communicated to other components of the virtual device platform 602 to be used in additional systems and/or processes described herein.

In some embodiments, the device balancing module 724 receives device state data relating to a plurality of devices (e.g., a plurality of device models, a plurality of operating conditions, etc.). The plurality of devices may be a part of a connected equipment platform (e.g., the CEP 606, etc.), a network, a community of devices, and/or any other suitable combination of devices. As indicated above, the device balancing module 724 may determine additional rating data for each of the plurality of devices, which may be used in a plurality of device ratings (respectively). In some embodiments, the device balancing module 724 is configured to determine a list of possible device rating data (e.g., of each of the plurality of devices), for example a list of possible device combinations that sufficiently balance the requirements of a building load across a plurality of devices. As an illustrative example, the device balancing module 724 may receive device state data of a plurality of chillers in a connected equipment platform (e.g., the CEP 606, etc.). The device balancing module 724 may analyze the data, and determine a list of possible device rating data of each of the plurality of devices (e.g., a first operating capacity of a first device, a first operating load of a first device, a second operating capacity of a second device, a second operating load of a second device, etc.). The list may represent different combinations of rating data (e.g., capacities, loads, etc.) of each of the devices, and each combination may be sufficient to satisfy the requirements of a building load.

According to an exemplary embodiment, the rating input module 728 is configured to obtain rating input data relating to a device, analyze the data, and generate a virtual device that represents the device. In an exemplary embodiment, the rating input module 728 obtains (e.g., receives, requests, pulls, etc.) rating input data from one or more components of the web services system 600. For example, the rating input module 728 may obtain rating input data from the device balancing module 724. In some embodiments, the rating input module 728 obtains rating input data from other (e.g., remote) systems and/or devices, as discussed below. The rating input data may include device model data, operating condition data, other device state data derived from the device state analyzer 720, additional rating data derived from the device balancing module 724, and/or any other suitable data relating to the device (e.g., component or device age or usage, maintenance history, etc.).

In some embodiments, the rating input module 728 obtains rating input data from other (e.g., remote) systems and/or devices. For example, the rating input module 728 may obtain rating input data (e.g., via the communications interface 702, the network 604, etc.) from the CEP 606 (and/or the devices 608, 610, etc.), the storage system 630, components of the BMS 400 and/or BMS 500, the third-party system 640, etc. As shown in FIG. 7, in some embodiments the rating input module 728 obtains rating input data directly from a remote system and/or device (i.e., no processing by the device state analyzer 720, the device balancing module 724, etc.). In this regard, certain remote systems and/or devices may be configured (e.g., designed, assembled, conditioned, etc.) such that certain processes carried out by the virtual device platform 602 are not needed. For example, the device 608 may be a YVAA chiller, which may be configured such that no additional rating data is needed for running a device rating (e.g., no processing by the device balancing module 724). As such, the device 608 may communicate the rating input data directly to the rating input module 728 (e.g., for additional processing).

In some embodiments, the rating input module 728 is configured to analyze the rating input data. For example, the rating input module 728 may analyze the rating input data (e.g., via one or more models or equations) to determine a quality of the rating input data (e.g., level of deviation between datasets, missing data points, a certainty value associated with the data, etc.). In some embodiments, the rating input module 728 analyzes the device model data to determine a quality of the device model data (e.g., assumed data points, level of error of the model data, etc.). In other embodiments, the rating input module 728 analyzes the operating condition data to determine a quality of the operating condition data (e.g., missing data points, level of deviation or error compared to expected or historic data points). In yet other embodiments, the rating input module 728 analyzes the rating input data (e.g., the additional rating data) to determine a quality of the rating input data (e.g., missing data points, level of deviation or error compared to expected or historic data points). According to an exemplary embodiment, the rating input module 728 is configured to assign the rating input data with the determined quality (e.g., via a data point), which can be used in additional processing and analysis, as discussed below.

In an exemplary embodiment, the rating input module 728 is also configured to analyze the rating input data, and generate a virtual device that represents the actual device. The virtual device may be a digital representation of the device (e.g., physical characteristics, parameters, properties, operating conditions, etc.). According to an exemplary embodiment, the rating input module 728 generates (e.g., determines, predicts, estimates, forecasts, etc.) the virtual device by adapting the device model of a device to the operating condition data of the device (i.e., the actual operating conditions of the device). In this regard, the rating input module 728 may adapt the model that reflects the optimal performance of the device (e.g., under design operating conditions), to the actual operating conditions of the device. In an exemplary embodiment, the rating input module 728 generates the virtual device as a function of the rating input data (e.g., device model data, operating condition data, device state data, additional rating data, quality data, etc.) and/or one or more models (e.g., a predictive model used to determine a device rating, an equipment model, a device model, a regression model, a deterministic load model, etc.). The rating input module 728 may also be configured to communicate the virtual device that is generated (e.g., in the form of virtual device data) to other components of the virtual device platform 602 (e.g., the rating engine 732), as discussed below.

According to an exemplary embodiment, the rating engine 732 is configured to obtain virtual device data, analyze the data, and generate a device rating for the virtual device. In an exemplary embodiment, the rating engine 732 obtains (e.g., receives, requests, pulls, etc.) virtual device data from one or more components of the web services system 600, for example the rating input module 728. As discussed above, the virtual device data may be a digital representation of the device, which includes an adaptation of a device model to the actual operating conditions of the device (e.g., an adaptation of the device model data to the operating condition data, etc.). The virtual device data may include the device model data, operating condition data, device state data, additional rating data, quality data, and/or any other suitable data relating to the device (e.g., modeled data, etc.) to run a device rating.

In some embodiments, the rating engine 732 is also configured to analyze the virtual device data, and generate a device rating for the virtual device. The rating engine 732 may be a component of a ratings platform, and may be configured to receive data (e.g., virtual device data), and/or generate a device rating that indicates a characteristic, component, configuration, function, and/or any other suitable information relating to a device or system associated with the data. For example, the rating engine 732 may receive virtual device data (which may be translated into a dataset, data subset, etc.), analyze the virtual device data, and generate a device rating that indicates a characteristic, component, configuration, function, and/or any other suitable information relating to the virtual device data. According to an exemplary embodiment, a device rating may include, but is not limited to: overall device performance, overall device configuration, device energy efficiency, cost efficiency, device optimization, component parts, component part configurations, etc.; device power consumption, performance, sound production, flow characteristics, output production, etc.; device certifications, specification, regulatory requirements, etc. In some embodiments, rating engine 732 includes some or all of the features of the rating engine, or ratings platform, described in detail in U.S. Patent Application No 17/477,297, titled "Systems and Methods for Modeling and Controlling Building Equipment," filed September 16, 2021, the entire disclosure of which is incorporated by reference herein.

According to some embodiments, the rating engine 732 generates (e.g., determines, predicts, estimates, forecasts, etc.) a device rating for the virtual device by analyzing the virtual device data as a function of one or more models (e.g., a predictive model used to determine a device rating, an equipment model, a device model, a regression model, a deterministic load model, etc.). For example, the rating engine 732 may receive virtual device data, analyze the data, and generate a virtual device rating that indicates an expected (e.g., predicted) performance of the virtual device based on the operating condition data (i.e., under the actual operating conditions). In some embodiments, the rating engine 732 receives the virtual device data, analyzes the data, and generates a virtual device rating that indicates an expected (e.g., predicted) cost, power consumption, device optimization, etc. of the virtual device based on the operating condition data (e.g., under the actual operating conditions). As will be discussed below, the rating engine 732 may further communicate the virtual device rating information (e.g., data) to other components of the web services system 600, for example, the rating database 736, the CEP 606 (e.g., via the communications interface 702, the network 604, etc.), the storage system 630, and/or any other suitable system or device. In some embodiments, the rating engine 732 is configured to receive, analyze, generate, and/or communicate ratings of a virtual device using the systems, processes, and/or techniques described in U.S. Pat. App. No. 17/477,297, titled "Systems and Methods for Modeling and Controlling Building Equipment," filed September 16, 2021, the entire disclosure of which is incorporated by reference herein.

According to an exemplary embodiment, the rating engine 732 is configured to communicate with the rating database 736. In an exemplary embodiment, the rating engine 732 is configured to communicate virtual device rating data to the rating database 736, and the rating database 736 is configured to receive and store the virtual device rating data. In some embodiments, the rating database 736 receives and stores data relating to a plurality of virtual device ratings (e.g., a plurality of ratings of a single virtual device, a plurality of ratings relating to a plurality of virtual devices, etc.). In other embodiments, the rating database 736 stores a database of all possible device operating conditions (e.g., virtual device data of all possible device operating conditions, etc.). The rating database 736 may communicate the database to the rating engine 732, and the rating engine 732 may run ratings for the database of all possible device operating conditions (e.g., provide ratings for all operating conditions of all of the virtual devices, etc.). In an exemplary embodiment, the rating database 736 receives and stores ratings as a database of all possible virtual device ratings for all possible device operating conditions. The rating database 736 may also be configured to communicate virtual device rating data to one or more components of the virtual device platform 602 (the rating engine 732, the comparison analyzer 740, the performance analyzer 744, etc.). In this regard, the rating database 736 may receive, store, and/or communicate virtual device rating data in order to increase the speed and/or efficiency of subsequent ratings, comparisons, analysis, and/or other processes implemented by the virtual device platform 602.

Also according to an exemplary embodiment, the rating engine 732 is configured to communicate the virtual device rating data to other (e.g., remote) systems and/or devices of the web services system 600. For example, the rating engine 732 may communicate (e.g., via the communications interface 702, the network 604, etc.) virtual device rating data to the CEP 606, the BMS 400 and/or the BMS 500, the user device 620, the storage system 630, and/or any other suitable system or device (e.g., the device 608, the device 610, etc.). In an exemplary embodiment, one or more components of the web services system 600 is/are configured to receive the virtual device rating data, and obtain, determine, communicate, etc. actual operating data of the device. The actual operating data may reflect the actual operating characteristics (e.g., performance, cost, power, etc.) of the device that is modeled by the virtual device rating. Further, one or more components of the web services system 600 may compare the virtual device rating data to the actual operating data. In this regard, the web services system 600 may be configured to compare the virtual device rating (e.g., a predicted performance of a virtual device under actual operating conditions) to the actual performance of the corresponding device (e.g., under actual operating conditions), so as to determine whether the device is operating at predicted characteristics (e.g., performance, cost, power, etc.). According to an exemplary embodiment, components of the web services system 600 are also configured to communicate the comparison information (e.g., in the form of rating comparison data) to other components of the web services system 600 (e.g., for additional processing, to initiate an automated action, etc.), as discussed below.

As an illustrative example, the rating engine 732 may communicate virtual device rating data to the CEP 606. In an exemplary embodiment, the CEP 606 receives the virtual device rating data (e.g., an expected performance of the virtual device, etc.), and obtains (e.g., receives, requests, pulls, etc.) actual operating data from the device (e.g., the device 608). The actual operating data may represent the actual operating characteristics of the device (e.g., actual performance) that is modeled by the virtual device rating (e.g., expected performance). Further, the CEP 606 may compare the virtual device rating to the actual performance of the device. In some embodiments, the CEP 606 determines the actual operating characteristics of the device are within a predetermined threshold compared to the virtual device rating (e.g., 0.05%, 0.1%, 1%, 5%, etc.), such that the device is operating sufficiently. In other embodiments, the CEP 606 may determine the actual operating characteristics are outside a predetermined threshold compared to the virtual device rating, such that an automated action may be initiated. As discussed above, the CEP 606 may compare the virtual device rating to the actual operating characteristics, and communicate the comparison (e.g., in the form of rating comparison data) to components of the virtual device platform 602 (e.g., the comparison analyzer 740, etc.). It should be understood that while the CEP 606 is described herein as obtaining virtual device rating data, obtaining actual operating data, and comparing the virtual device rating data to the actual performance of the corresponding device, other components of the web services system 600 (e.g., the performance analyzer 744, components of the BMS 400 and/or BMS 500, the user device 620, the storage system 630, etc.) may be configured to implement any or all of the processes described herein.

According to an exemplary embodiment, the comparison analyzer 740 is configured to obtain rating comparison data relating to a device, analyze the data, and/or initiate an automated action based on the comparison. In an exemplary embodiment, the comparison analyzer 740 obtains (e.g., receives, requests, pulls, etc.) rating comparison data from one or more components of the web services system 600. For example, the comparison analyzer 740 may obtain rating comparison data from the CEP 606 and/or components thereof (e.g., the device 608, the device 610, etc.), the rating database 736, components of the BMS 400 and/or the BMS 500, the storage system 630, etc. The rating comparison data may include, for example information that relates the virtual device rating to the actual performance of the device as discussed above.

In an exemplary embodiment, the comparison analyzer 740 is also configured to analyze the rating comparison data, and initiate an automated action based on the comparison analysis. In an exemplary embodiment, automated actions include providing comparison data and/or an indication associated with the comparison data (e.g., message, notification, warning, etc.) to an external device (e.g., a component of the BMS 400, BMS 500, etc.), a user interface (e.g., the user interface 622 of the user device 620), and/or any other suitable device or system. For example, the automated action may include providing a notification (e.g., message, alert, alarm, instructions, etc.) to an external device indicating that a fault has been detected or that a maintenance action is to be implemented. In some embodiments, the automated action also includes obtaining input provided via one or more devices and/or interfaces. For example, an automated action may include providing an indication to the user device 620 (e.g., a GUI on the user interface 622 indicating the device is operating sufficiently, etc.), and/or obtaining user input provided via the user interface 622. In some embodiments, automated actions include control actions, such as generating and/or providing control signals to a device (e.g., the device 608, the device 610, etc.), a system or platform in communication with a device (e.g., CEP 606, etc.), and/or another suitable device or system (e.g., the BMS 400, the BMS 500, a component thereof, the third-party system 640, etc.). For example, an automated action may include providing control signals to the device 608 (e.g., to adjust the operating characteristics of the device), the CEP 606 (e.g., to modify the operating characteristics of the device 608, the device 610, etc.), the BMS 400 and/or the BMS 500 (e.g., to adjust the operating characteristics of a chiller of the BMS 400, etc.), and/or any other suitable device or system. In other embodiments, automated actions include instructions to store, process, and/or modify data or information. For example, an automated action may include instructions to the storage system 630 to store data (e.g., the rating comparison data, automated action data, etc.).

In an exemplary embodiment, the comparison analyzer 740 analyzes the rating comparison data, and determines whether the actual operating characteristics (e.g., actual performance) of the device is/are within a predetermined threshold (e.g., 0.05%, 0.1%, 1%, 5%, etc.) compared to the virtual device rating (e.g., predicted performance of the device). If the comparison analyzer 740 determines the actual operating characteristics is/are within the predetermined threshold, the comparison analyzer 740 may initiate a first automated action (e.g., provide an indication the device is operating sufficiently to the user device 620, etc.). Conversely, if the comparison analyzer 740 determines the actual operating characteristics is/are not within the predetermined threshold, the comparison analyzer 740 may initiate a second automated action (e.g., provide an indication that a fault has been detected or that maintenance should be performed, provide control signals to the device in order bring the device within the predetermined threshold, etc.). As discussed above, the comparison analyzer 740 may initiate one or more automated actions, which may include communicating with one or more components of the web services system 600.

As an illustrative example, the comparison analyzer 740 may receive rating comparison data from the CEP 606 relating to a chiller (e.g., the device 608). The comparison analyzer 740 may analyze the actual operating characteristics (e.g., performance) of the chiller to the predicted characteristics (e.g., performance) reflected in the virtual device rating. If the comparison analyzer 740 determines the actual performance of the chiller is within a predetermined threshold (e.g., 0.05%, 0.1%, 1%, 5%, etc.) compared to the predicted performance, the comparison analyzer 740 may provide an indication to the user device 620 (e.g., a message, a GUI, etc.) indicating that the chiller is operating sufficiently. Conversely, if the comparison analyzer 740 determines the actual performance of the chiller is not within the predetermined threshold, the comparison analyzer 740 may provide an indication to the user device 620 (e.g., a message, a fault alert or alarm, instructions, etc.) and/or instructions to the CEP 606 to adjust the operation of the chiller and/or control the chiller to adjust the operation (i.e., bring the actual performance of the chiller within the predetermined threshold, etc.).

According to an exemplary embodiment, the performance analyzer 744 is configured to implement any and/or all of the processes described above. For example, the performance analyzer 744 may be configured to obtain virtual device rating data relating to a device, obtain actual operating data of the device, compare the virtual device rating data to the actual performance of the device, and initiate an automated action based on the comparison.

In an exemplary embodiment, the performance analyzer 744 obtains (e.g., receives, requests, pulls, etc.) virtual device rating data from the rating engine 732 (e.g., after the rating engine 732 runs a device rating). In some embodiments, the performance analyzer 744 obtains (e.g., receives, requests, pulls, etc.) virtual device rating data from the rating database 736 (e.g., data stored in the rating database 736, data stored in a database of all possible virtual device ratings for all possible device operating conditions, etc.). In other embodiments, the performance analyzer 744 obtains virtual device rating data from the storage system 630 (e.g., a database of all possible virtual device ratings for all possible device operating conditions, etc.), and/or another suitable storage device. In this regard, in some embodiments the performance analyzer 744 obtains stored virtual device rating data (e.g., in a database in the rating database 736, the storage system 630, etc.), and merely compares the virtual device rating to the actual operating characteristics of a device, as discussed below.

In an exemplary embodiment, the performance analyzer 744 is also configured to obtain (e.g., receive, request, pull, etc.) actual operating data from a device. The actual operating data may reflect the actual operating characteristics of the device that are modeled in the virtual device rating, as discussed above. In an exemplary embodiment, the performance analyzer 744 obtains actual operating data from the CEP 606. In other embodiments, the performance analyzer 744 obtains actual operating data from the device 608, the device 610, a component of the BMS 400 and/or the BMS 500 (e.g., a chiller, a pump, a cooling tower, etc.), the third-party system 640, and/or any other suitable system and/or device.

In an exemplary embodiment, the performance analyzer 744 is further configured compare the virtual device rating data to the actual operating data. As discussed above, the performance analyzer 744 may compare the virtual device rating (e.g., the expected performance of the device) to the actual operating characteristics (e.g., actual performance of the device). Further, the performance analyzer 744 may compare the two sets of data, and determine whether the actual operating data is within a predetermined threshold (e.g., 0.05%, 0.1%, 1%, 5%, etc.) compared to the virtual device rating data. In an exemplary embodiment, if the performance analyzer 744 determines the actual operating characteristics is/are within the predetermined threshold, the performance analyzer 744 may initiate a first automated action (e.g., provide an indication the device is operating sufficiently, etc.). Conversely, if the performance analyzer 744 determines the actual operating characteristics is/are outside the predetermined threshold, the performance analyzer 744 may initiate a second automated action (e.g., provide an indication the device is not operating sufficiently, provide a fault indicator or alarm, control the device to bring the device within the predetermined threshold, etc.). The automated action may include communicating with, controlling, and/or otherwise directing one or more components of the web services system 600, as discussed above.

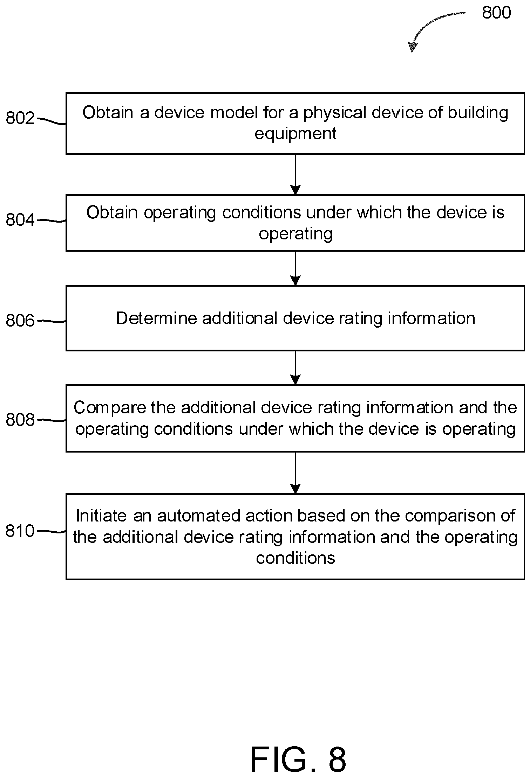

Referring now to FIG. 8, a process 800 for determining a device characteristic and/or controlling a device of building equipment is shown, according to an exemplary embodiment. Process 800 may be implemented by any and/or all of the components of the web services system 600 of FIGS. 6-7 (e.g., via the virtual device platform 602, etc.). Process 800 may also be implemented by other systems, devices, and/or components (e.g., components of the web services system 600, the virtual device platform 602, etc.). It should also be appreciated that in some embodiments process 800 may be implemented using additional, different, and/or fewer steps.

Process 800 is shown to include obtaining a device model for a physical device of building equipment (step 802), according to an exemplary embodiment. The device model may be obtained (e.g., received, requested, pulled, etc.) from a connected equipment platform or a component thereof (e.g., the CEP 606, the device 608, the device 610), a component of a building management system (e.g., the BMS 400, the BMS 500), a user device (e.g., the user device 620), a storage system (e.g., the storage system 630), a third-party system (e.g., the third-party system 640), and/or any other suitable system or device. In an exemplary embodiment, the device model indicates an expected performance of a device under design operating conditions. In some embodiments, the device model includes standard model characteristics that relate optimal performance of a device to the properties of the device under specific (e.g., design) conditions. In other embodiments, the device model relates other characteristics of a device (e.g., capacity, cost, efficiency, output, etc.) to the properties of the device (e.g., device type, family, model, application, location of use, power consumption, components of the device, physical properties of the device, thermodynamic properties of the device, etc.) under specific conditions (e.g., design operating conditions, etc.).

Process 800 is shown to include obtaining operating conditions under which the physical device is operating (step 804), according to an exemplary embodiment. The operating conditions may also be obtained (e.g., received, requested, pulled, etc.) from the connected equipment platform or a component thereof (e.g., the CEP 606, the device 608, the device 610), a component of the building management system (e.g., the BMS 400, the BMS 500), a third-party system or device (e.g., the third-party system 640), a user device (e.g., the user device 620), a storage system (e.g., the storage system 630), and/or any other suitable system or device. In an exemplary embodiment, the operating conditions reflect to the conditions the physical device is operating under. The operating conditions may include information relating to device and/or component temperatures, pressures, flow rates, valve positions, resource consumptions, control setpoints, model parameters, and/or any other information relating to the conditions under which the device is operating. Further, the operating conditions may include device and/or component load requirements, building temperature setpoints, occupancy data, weather data, energy data, schedule data, and/or other building parameters.

Process 800 is shown to include determining additional device rating information (step 806). The additional device rating information may be determined based on (e.g., as a function of) the device model of the device and/or the operating condition data. Further, the additional device rating information may be determined as a function of one or more models or equations (e.g., a predictive model, equipment model, device model, regression model, state equations, thermodynamic equations, etc.). In some embodiments, the additional device rating information is also determined based on (e.g., as a function of) the information provided when determining the state of the device, as discussed above. In an exemplary embodiment, the additional device rating information includes an operating capacity of the device (e.g., operating at 10%, 15%, 25%, 50%, etc. capacity), a load applied at the device (e.g., a heating, cooling, electricity, energy, etc. load), a flow rate (e.g., a refrigerant flow, etc.), and/or any other suitable information relating to the device that may be used in rating a device.

Process 800 is shown to include comparing the additional device rating information and the operating conditions under which the physical device is operating (step 808). For example, the additional device rating information and the operating condition information may be compared using one or more models or equations (e.g., a predictive model, equipment model, device model, regression model, state equations, thermodynamic equations, etc.). In some embodiments, the additional device rating information and the operating condition information are compared to determine whether the actual operating conditions are within a predetermined threshold compared to the additional device rating information (e.g., 0.05%, 0.1%, 1%, 5%, etc.), such that the device is operating sufficiently. In other embodiments, it may be determined that the actual operating conditions are outside a predetermined threshold compared to the additional device rating information, such that an automated action may be initiated (as discussed below). In some embodiments, the comparison information may be communicated to other components of a system (e.g., the virtual device platform 602) and/or devices (e.g., components of the BMS 400 and/or BMS 500, components or devices of the CEP 606, the user device 620, etc.), as discussed above.

Process 800 is shown to include initiating an automated action based on the comparison of the additional device rating information and the actual operating conditions (step 810). In an exemplary embodiment, a first automated action is initiated by comparing the actual operating conditions with the additional device rating information, and determining the actual operating conditions are within the predetermined threshold compared to the additional device rating information. For example, the first automated action may include providing an indication to a device (e.g., a message or notification to the user device 620, a component of the BMS 400, the BMS 500, etc.) indicating the device is operating sufficiently. In some embodiments, a second automated action is initiated by comparing the actual operating conditions with the additional device rating information, and determining the actual operating conditions are outside the predetermined threshold. For example, the second automated action may include providing an indication to a device (e.g., an alert, alarm, instructions to the user device 620, a component of the BMS 400, BMS 500, etc.) indicating a fault has been detected or a maintenance action should be initiated. In some embodiments, the second automated action includes controlling one or more components of a building management, providing an indication to the user device (e.g., providing a GUI on a user interface, providing a message to the user device indicating the device is operating as expected, etc.), providing instructions to a storage system (e.g., instructions to store the comparison data and/or automated action data, etc.), and/or any other suitable action relating to the operation of the device and/or another system.

As an illustrative example, the components, systems, and/or processes described herein may be used to determine a cooling capacity of a chiller that is installed at a building site. In an exemplary embodiment, a chiller model is obtained that indicates the expected performance of the chiller under design operating conditions. The model may include standard model characteristics that relate the optimal performance of the chiller to the design chiller properties, under design operating conditions. Further, the operating conditions of the chiller may be obtained (e.g., received, retrieved, pulled), which indicate the actual conditions under which the chiller is operating at the building site. The operating conditions may be obtained (e.g., retrieved, pulled, etc.) from on-site components of the chiller (e.g., a meter, valve, gauge), which may include third-party components. The operating conditions may include a power input to the chiller, a power usage of the chiller, and/or one or more characteristics of the refrigerant of the chiller (e.g., refrigerant levels). In some embodiments, the operating conditions do not include fluid flow characteristics of the chiller (e.g., operating condition information is obtained without obtaining information from a flow meter). Based on the chiller model and/or the operating conditions, additional rating information may be determined. For example, the operating capacity of the chiller, the cooling capacity of the chiller, the load applied at the chiller, the refrigerant flow rate in the chiller, etc. may be determined.

In some embodiments, once the additional rating information is determined (e.g., operating capacity, cooling capacity, etc. of the chiller), the additional rating information may be used to determine additional characteristics of the chiller. For example, the additional rating information (e.g., operating capacity, cooling capacity, etc. of the chiller) may be used to determine an operating capacity of the chiller as a percentage of the chiller design capacity, and/or generate a chiller efficiency profile. Further, the additional rating information may be compared to the operating conditions (e.g., operating condition data). In this regard, the actual performance of the chiller (e.g., the operating data) may be compared to the expected (e.g., predicted) performance of the chiller (e.g., the additional rating information). Based on the comparison, an automated action may be initiated. For example, if it is determined that the actual performance of the chiller is sufficiently similar to the expected performance (e.g., within a predetermined threshold), an indication may be provided that indicates the chiller is performing as expected. Conversely, if it is determined that the actual performance of the chiller is not sufficiently similar to the expected performance (e.g., outside the predetermined threshold), an indication may be provided that indicates a fault relating to the operation of the chiller has been detected and/or a maintenance action should be initiated, and/or components of the chiller may be adjusted (e.g., controlled) so as to bring chiller's actual performance in accordance with the expected performance.

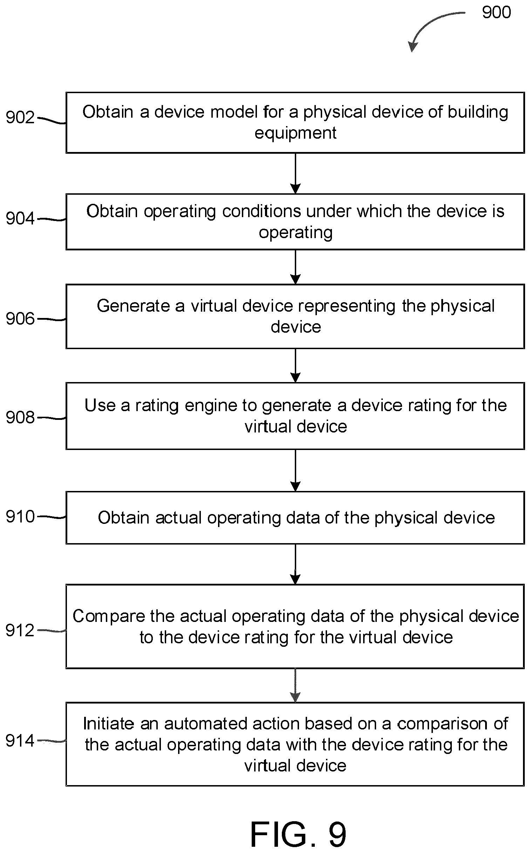

Referring now to FIG. 9, a process 900 for evaluating and/or controlling the operating characteristics of a device of building equipment is shown, according to an exemplary embodiment. Process 900 may be implemented by any and/or all of the components of the web services system 600 of FIGS. 6-7 (e.g., via the virtual device platform 602, etc.). Process 900 may also be implemented using the components of FIGS. 1-5. It should be appreciated that all or part of the process 900 may be implemented by other systems, devices, and/or components (e.g., components of the web services system 600, the virtual device platform 602, etc.). It should also be appreciated that in some embodiments process 900 may be implemented using additional, different, and/or fewer steps.

Process 900 is shown to include obtaining a device model for a physical device of building equipment (step 902), according to an exemplary embodiment. The device model may be obtained (e.g., received, requested, pulled, etc.) from a connected equipment platform or a component thereof (e.g., the CEP 606, the device 608, the device 610), a component of a building management system (e.g., the BMS 400, the BMS 500), a user device (e.g., the user device 620), a storage system (e.g., the storage system 630), a third-party system (e.g., the third-party system 640), and/or any other suitable system or device. In an exemplary embodiment, the device model indicates an expected performance of a device under design operating conditions. In some embodiments, the device model includes standard model characteristics that relate optimal performance of a device to the properties of the device under specific (e.g., design) conditions. In other embodiments, the device model relates other characteristics of a device (e.g., capacity, cost, efficiency, output, etc.) to the properties of the device (e.g., device type, family, model, application, location of use, power consumption, components of the device, physical properties of the device, thermodynamic properties of the device, etc.) under specific conditions (e.g., design operating conditions, etc.).

Process 900 is shown to include obtaining operating conditions under which the physical device is operating (step 804), according to an exemplary embodiment. The operating conditions may also be obtained (e.g., received, requested, pulled, etc.) from the connected equipment platform or a component thereof (e.g., the CEP 606, the device 608, the device 610), a component of the building management system (e.g., the BMS 400, the BMS 500), a third-party device or system (e.g., the third-party system 640), a user device (e.g., the user device 620), a storage system (e.g., the storage system 630), and/or any other suitable system or device. In an exemplary embodiment, the operating conditions reflect to the conditions the physical device is operating under. The operating conditions may include information relating to device and/or component temperatures, pressures, flow rates, valve positions, resource consumptions, control setpoints, model parameters, and/or any other information relating to the conditions under which the device is operating. Further, the operating conditions may include device and/or component load requirements, building temperature setpoints, occupancy data, weather data, energy data, schedule data, and/or other building parameters.

In some embodiments, process 900 includes determining a state or condition of the device. For example, process 900 may include determining whether the device is in a steady state (or a transient state). In an exemplary embodiment, determining the state or condition of the device involves using monitored variables to estimate parameters of the device (e.g., via models, etc.). In some embodiments, various steps of process 900 are implemented when the device is in a steady state. In other embodiments, if it is determined the device is in a transient state, process 900 includes adjusting the operating conditions of the device (e.g., to bring the device to a steady state).

In some embodiments, process 900 also includes determining additional device rating information. The additional device rating information may be determined based on (e.g., as a function of) the device model and/or the operating conditions of the device. In some embodiments, the additional device rating information is also determined based on (e.g., as a function of) the information provided when determining the state of the device, as discussed above. In an exemplary embodiment, the additional device rating information includes an operating capacity of the device (e.g., operating at 10%, 15%, 25%, 50%, etc. capacity), a load applied at the device (e.g., a heating, cooling, electricity, energy, etc. load), a flow rate (e.g., a refrigerant flow, etc.), and/or any other suitable information relating to the device that may be used in rating a device.

Process 900 is shown to also include generating a virtual device representing the physical device (step 906), according to an exemplary embodiment. The virtual device may be a digital representation of the physical device (e.g., physical characteristics, parameters, properties, operating conditions, etc.). In an exemplary embodiment, the virtual device is generated by adapting the device model to the operating conditions of the device. In this regard, the virtual device may be based on (e.g., a function of) the device model, the operating conditions, the device state information, and/or the additional device rating information.

Process 900 is further shown to include using a rating engine to generate a device rating for the virtual device (step 908), according to an exemplary embodiment. In an exemplary embodiment, the device rating indicates an expected performance of the physical device under the operating conditions (e.g., via the virtual device). In some embodiments, the device rating includes a condition, parameter, and/or any other suitable characteristic of the virtual device. For example, the device rating may include an overall device configuration, device energy efficiency, cost efficiency, device optimization, component parts, component part configurations, device power consumption, performance, sound production, flow characteristics (e.g., maximum, minimum, estimated flows of an evaporator or condenser, etc.), output production, device certifications, specification, regulatory requirements, and/or any other suitable device characteristic.

Process 900 is shown to also include obtaining actual operating data of the physical device (step 910), according to an exemplary embodiment. In an exemplary embodiment, the actual operating data indicates an actual performance of the device under the operating conditions. The actual operating data may be obtained (e.g., received, requested, pulled, etc.) from the connected equipment platform or a component thereof (e.g., the CEP 606, the device 608, the device 610), a component of the building management system (e.g., the BMS 400, the BMS 500), a third-party system or device (e.g., the third-party system 640), a user device (e.g., the user device 620), a storage system (e.g., the storage system 630), and/or any other suitable system or device. In some embodiments, the actual operating data indicates another suitable characteristic of the device (e.g., that corresponds to the device rating of the virtual device). For example, the operating data may indicate the overall device configuration, device energy efficiency, cost efficiency, device optimization, component parts, component part configurations, device power consumption, performance, sound production, flow characteristics, output production, device certifications, specification, regulatory requirements, and/or any other suitable device characteristic.

Process 900 is shown to include comparing the actual operating data to the device rating for the virtual device (step 912). In an exemplary embodiment, the actual operating data is compared to the device rating for the virtual device via the connected equipment platform or a component thereof (e.g., the CEP 606, the device 608, the device 610); however, in other embodiments the actual operating data is compared to the device rating for the virtual data via another system and/or device (e.g., the virtual device platform 602, etc.). In some embodiments, comparing the actual operating data to the device rating for the virtual device can be used to determine and/or generate one or more device profiles or component characteristic profiles, which can be communicated or displayed via an interface. For example, comparing the actual operating data to the device rating for the virtual device can be used to determine a condenser approach temperature profile, an evaporator approach temperature profile, a superheat discharge profile, or other suitable comparison profiles relating to components or characteristics of the device.

In some embodiments, the process 900 includes comparing the actual operating data to the device rating for the virtual device, and determining whether the actual operating data is within a predetermined threshold compared to the device rating. In this regard, comparing the actual operating data to the device rating for the virtual device may indicate whether the actual performance of a device (e.g., the actual operating data) is within a predetermined threshold of the predicted performance of the device (e.g., modeled by the device rating for the virtual device). The predetermined threshold may be 0.05%, 0.1%, 1%, 5%, and/or any other suitable threshold. In an exemplary embodiment, if it is determined the actual operating data is within the predetermined threshold compared to the device rating, a first automated action may be initiated (e.g., an indication that the physical device is operating as expected, etc.), as discussed below. In other embodiments, if it is determined the actual operating data is outside the predetermined threshold, a second automated action may be initiated (e.g., control the physical device to bring the operation of the device within the predetermined threshold, etc.), as discussed below.

Process 900 is shown to include initiating an automated action based on a comparison of the actual operating data with the device rating for the virtual device (step 914), according to an exemplary embodiment. As discussed above, in an exemplary embodiment a first automated action is initiated by comparing the actual operating data with the device rating for the virtual device, and determining the actual operating data is within the predetermined threshold compared to the device rating. In some embodiments, a second automated action is initiated by comparing the actual operating data with the device rating for the virtual device, and determining the actual operating data is outside the predetermined threshold. An automated action may include providing an indication to a device (e.g., a message or alert to the user device 620, a component of the BMS 400, the BMS 500, etc.) indicating the device is operating sufficiently, or that a fault has been detected and/or a maintenance action should be initiated. The automated action may also include providing instructions to the connected equipment platform (e.g., instructions to adjust the operating conditions of the device, etc.), controlling one or more components of the connected equipment platform (e.g., controlling the device to adjust the operating conditions of the device), controlling one or more components of a building management, providing an indication to the user device (e.g., providing a GUI on a user interface, providing a message to the user device indicating the device is operating as expected, etc.), providing instructions to a storage system (e.g., instructions to store the comparison data and/or automated action data, etc.), and/or any other suitable action relating to the operation of the device and/or another system.

As an illustrative example, the components, systems, and/or processes described herein may be used to evaluate the actual performance of a chiller that is installed at a building site. In an exemplary embodiment, a chiller model is obtained that indicates the expected performance of the chiller under design operating conditions. The model may include standard model characteristics that relate the optimal performance of the chiller to the design chiller properties, under design operating conditions. Further, the operating conditions of the chiller may be obtained, which indicate the actual conditions under which the chiller is operating at the building site. Based on the chiller model and/or the operating conditions, the state of the chiller may be determined (e.g., steady state, transient state, etc.). In some embodiments, if the chiller is in a transient state, components of the chiller may be adjusted so as to bring the chiller to a steady state. In addition, based on the chiller model and/or the operating conditions, additional rating information may be determined. For example, the operating capacity of the chiller, the load applied at the chiller, the refrigerant flow rate in the chiller, etc. may be determined. In this regard, the additional rating information may be parameters and/or information that may be used to run a chiller rating, but are not otherwise available from other systems and/or devices. In some embodiments, the chillers are configured (e.g., designed, etc.) such that no additional rating information is needed. In this regard, all the parameters and/or information to run a chiller rating may be readily discerned from the available systems and/or devices.

Based on the chiller model, the operating conditions, and/or the additional rating information, a virtual chiller may be generated that represents the physical chiller. The virtual chiller may be a digital representation of the actual chiller, and may be generated by adapting the chiller model (e.g., chiller under design operating conditions) to the actual operating conditions. The virtual chiller may be input into a rating engine, which may provide a chiller rating for the virtual chiller. Using the virtual chiller, the rating engine may provide a chiller rating that indicates the expected (e.g., predicted) performance of the chiller under the actual operating conditions. Further, actual operating data may also be obtained, which indicates the actual performance of the chiller under the operating conditions.

Once the chiller rating (e.g., of the virtual chiller) and the actual operating data is obtained, the operating data may be compared to the chiller rating. In this regard, the actual performance of the chiller (e.g., the operating data) may be compared to the expected (e.g., predicted) performance of the chiller (e.g., the chiller rating). Based on the comparison, an automated action may be initiated. For example, if it is determined that the actual performance of the chiller is sufficiently similar to the expected performance (e.g., within a predetermined threshold), an indication may be provided that indicates the chiller is performing as expected. Conversely, if it is determined that the actual performance of the chiller is not sufficiently similar to the expected performance (e.g., outside the predetermined threshold), an indication may be provided that indicates a fault relating to the operation of the chiller has been detected and/or a maintenance action should be initiated, and/or components of the chiller may be adjusted (e.g., controlled) so as to bring chiller's actual performance in accordance with the expected performance.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

In various implementations, the steps and operations described herein may be performed on one processor or in a combination of two or more processors. For example, in some implementations, the various operations could be performed in a central server or set of central servers configured to receive data from one or more devices (e.g., edge computing devices/controllers) and perform the operations. In some implementations, the operations may be performed by one or more local controllers or computing devices (e.g., edge devices), such as controllers dedicated to and/or located within a particular building or portion of a building. In some implementations, the operations may be performed by a combination of one or more central or offsite computing devices/servers and one or more local controllers/computing devices. All such implementations are contemplated within the scope of the present disclosure. Further, unless otherwise indicated, when the present disclosure refers to one or more computer-readable storage media and/or one or more controllers, such computer-readable storage media and/or one or more controllers may be implemented as one or more central servers, one or more local controllers or computing devices (e.g., edge devices), any combination thereof, or any other combination of storage media and/or controllers regardless of the location of such devices.

## Claims

1. A method for evaluating and controlling building equipment, the method comprising:
- obtaining a device model for a physical device of building equipment installed at a building site, the device model indicating an expected performance of the physical device under design operating conditions;
- obtaining operating conditions under which the physical device is operating at the building site;
- generating a virtual device representing the physical device by adapting the device model to the operating conditions;
- using a rating engine to generate a device rating for the virtual device, the device rating indicating an expected performance of the physical device under the operating conditions;
- obtaining actual operating data indicating an actual performance of the physical device under the operating conditions; and
- initiating an automated action based on a comparison of the actual operating data with the device rating for the virtual device.

2. The method of claim 1,
further comprising determining a state of the physical device.

3. The method of claim 2,
wherein in response to determining the state of the physical device is a transient state, the method further comprises initiating another automated action to bring the physical device to a steady state.

4. The method of any one of claims 1 to 3,
further comprising determining additional rating information based on the device model and the operating conditions.

5. The method of claim 4,
wherein determining additional rating information includes determining at least one of an operating capacity of the physical device, a load applied at the physical device, and a flow rate of a fluid of the physical device.

6. The method of any one of claims 1 to 5, further comprising:
- comparing the actual operating data with the device rating for the virtual device; and
- determining whether the actual operating data is within a predetermined threshold compared to the device rating for the virtual device.

7. The method of claim 6,
wherein in response to determining the actual operating data is within the predetermined threshold compared to the device rating for the virtual device, initiating the automated action includes providing an indication that the physical device is operating in accordance with the expected performance, or
wherein in response to determining the actual operating data is outside the predetermined threshold compared to the device rating for the virtual device, initiating the automated action includes controlling a component of the physical device to bring the actual performance of the physical device in accordance with the expected performance.

8. The method of any one of claims 1 to 7,
wherein obtaining the device model for the physical device of building equipment installed at the building site includes obtaining a heat pump model for a physical heat pump installed at the building site.

9. A system for evaluating and controlling building equipment, the system comprising:
- one or more memory devices having instructions stored thereon that, when executed by one or more processors, cause the one or more processors to perform operations comprising:
- obtaining a device model for a physical device of building equipment installed at a building site, the device model indicating an expected performance of the physical device under design operating conditions;
- obtaining operating conditions under which the physical device is operating at the building site;
- generating a virtual device representing the physical device by adapting the device model to the operating conditions;
- using a rating engine to generate a device rating for the virtual device, the device rating indicating an expected performance of the physical device under the operating conditions;
- obtaining actual operating data indicating an actual performance of the physical device under the operating conditions; and
- initiating an automated action based on a comparison of the actual operating data with the device rating for the virtual device.

10. The system of claim 9,
the operations further comprising determining a state of the physical device.

11. The system of claim 10,
wherein in response to determining the state of the physical device is a transient state, the method further comprises initiating another automated action to bring the physical device to a steady state.

12. The system of claim any one of claims 9 to 11,
the operations further comprising determining additional rating information based on the device model and the operating conditions,
wherein the additional rating information preferably includes at least one of an operating capacity of the physical device, a load applied at the physical device, and a flow rate of a fluid of the physical device.

13. The system of any one of claims 9 to 12, the operations further comprising:
- comparing the actual operating data with the device rating for the virtual device; and
- determining whether the actual operating data is within a predetermined threshold compared to the device rating for the virtual device.

14. The system of claim 13,
wherein in response to determining the actual operating data is within the predetermined threshold compared to the device rating for the virtual device, initiating the automated action includes providing an indication that the physical device is operating in accordance with the expected performance.

15. A non-transitory computer readable medium comprising instructions stored thereon that, when executed by one or more processors, cause the one or more processors to perform the method of any one of claims 1 to 8.
